(19) Europäisches Patentamt / European Patent Office / Office européen des brevets

(11) **EP 3 765 835 B1**

(12) **FASCICULE DE BREVET EUROPÉEN**

(45) Date de publication et mention
de la délivrance du brevet:
**09.03.2022 Bulletin 2022/10**

(21) Numéro de dépôt: **19742813.9**

(22) Date de dépôt: **14.03.2019**

(51) Classification Internationale des Brevets (IPC):
**G01N 21/21** (2006.01)  **G01N 21/47** (2006.01)
**G01J 3/447** (2006.01)  **G01J 4/00** (2006.01)

(52) Classification Coopérative des Brevets (CPC):
**G01N 21/211; G01N 21/47;** G01N 21/274;
G01N 2021/213; G01N 2021/4792

(86) Numéro de dépôt international:
**PCT/FR2019/050577**

(87) Numéro de publication internationale:
**WO 2019/186018 (03.10.2019 Gazette 2019/40)**

(54) **ELLIPSOMÈTRE OU SCATTÉROMÈTRE INSTANTANÉ ET PROCÉDÉ DE MESURE ASSOCIÉ**

MOMENTANELLIPSOMETER ODER STREUMESSGERÄT UND ZUGEHÖRIGES MESSVERFAHREN

INSTANTANEOUS ELLIPSOMETER OR SCATTEROMETER AND ASSOCIATED MEASURING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.03.2018 FR 1852225**

(43) Date de publication de la demande:
**20.01.2021 Bulletin 2021/03**

(73) Titulaire: **Horiba France SAS
91120 Palaiseau (FR)**

(72) Inventeurs:
• **ACHER, Olivier**
  **91190 Gif-sur-Yvette (FR)**
• **PODZOROV, Alexander**
  **Otsu, Shiga 520-0102 (JP)**
• **NGUYEN, Thanh-Liem**
  **91300 Massy (FR)**
• **VILLIER, Brice**
  **91300 Massy (FR)**
• **MELIZZI, Géraldine**
  **91440 Bures-sur-Yvette (FR)**
• **GASTON, Jean-Paul**
  **91810 Vert le Grand (FR)**

(74) Mandataire: **Jacobacci Coralis Harle
32, rue de l'Arcade
75008 Paris (FR)**

(56) Documents cités:
JP-A- H11 211 654       JP-B2- 3 269 107
US-A1- 2010 110 427     US-A1- 2013 010 295
US-A1- 2015 204 724     US-A1- 2017 045 397
US-B1- 6 384 916

## Description

DOMAINE TECHNIQUE AUQUEL SE RAPPORTE L'INVENTION

La présente invention concerne de manière générale le domaine des instruments de mesure optique de matériaux et/ou couches minces.

Elle concerne plus particulièrement un ellipsomètre ou scattéromètre spectroscopique ou monochromatique et un procédé d'ellipsométrie ou de scattérométrie spectroscopique ou monochromatique.

Elle concerne en particulier un ellipsomètre ou scattéromètre spectroscopique ou monochromatique à très haute cadence de mesure.

ARRIERE-PLAN TECHNOLOGIQUE

Un ellipsomètre ou scattéromètre spectroscopique comporte généralement un bras d'illumination et un bras de détection. Le bras d'illumination comprend une source de lumière à large bande spectrale et un polariseur configuré pour polariser un faisceau lumineux incident sur un échantillon avec un angle d'incidence (AOI pour Angle Of Incidence) déterminé. Le bras de détection reçoit un faisceau lumineux formé par réflexion ou transmission, pour un ellipsomètre, et par diffraction pour un scattéromètre, du faisceau incident sur l'échantillon et comprend un analyseur de polarisation et un spectromètre pour détecter le faisceau réfléchi, transmis ou diffracté en fonction de la longueur d'onde.

Un ellipsomètre ou scattéromètre monochromatique comporte les mêmes éléments, la source de lumière étant généralement monochromatique et un détecteur recevant le faisceau réfléchi, transmis ou diffracté en aval de l'analyseur de polarisation sans requérir un spectromètre.

Dans un ellipsomètre fonctionnant en réflexion sur l'échantillon, le bras de détection est disposé pour recevoir le faisceau réfléchi dans le plan d'incidence qui forme un angle opposé à l'angle d'incidence par rapport à la normale à l'échantillon. Dans un ellipsomètre fonctionnant en transmission, le bras de détection est disposé pour recevoir le faisceau transmis par l'échantillon dans le plan d'incidence.

Dans un scattéromètre, le bras de détection est disposé pour recevoir un faisceau diffracté par l'échantillon dans le plan d'incidence et qui forme un angle en général différent de l'angle d'incidence par rapport à la normale à l'échantillon.

Il existe de nombreux ellipsomètres monochromatiques ou spectroscopiques. La plupart de ces ellipsomètres comportent un modulateur optique de polarisation pour moduler temporellement l'état de polarisation du faisceau incident ou réfléchi par l'échantillon, afin d'acquérir les composantes de polarisation du faisceau réfléchi ou transmis par l'échantillon suivant au moins deux états de polarisation indépendants.

On connaît notamment des ellipsomètres monochromatiques ou spectroscopiques basés sur un polariseur tournant ou un compensateur tournant, un modulateur optique de phase ou encore un système biréfringent à cristaux liquides qui permettent de faire varier la polarisation du faisceau lumineux en fonction du temps. Quel que soit le type de modulateur optique de polarisation, un système de détection est utilisé pour acquérir une série de mesures ou de spectres en fonction du temps, c'est-à-dire en fonction de la modulation de polarisation. Un spectromètre comporte généralement un photodétecteur constitué d'une barrette ou matrice de pixels qui mesure l'intensité du faisceau lumineux, chaque pixel ou chaque colonne de pixel étant associée à une longueur d'onde. Dans ces conditions, la détermination des paramètres recherchés en ellipsométrie est effectuée par l'analyse d'une série de mesures monochromatiques ou de spectres d'intensité 1(lambda) en fonction du temps, sur au moins une période de modulation. De nombreuses publications ont décrit différentes manières de déduire les grandeurs ellipsométriques à partir d'une série de mesures monochromatiques ou de spectres 1(lambda) déterminés pour différentes position du ou des composants modulant la polarisation. L'analyse d'une série de mesures monochromatiques ou de spectres I(lambda) peut être faite dans le domaine fréquentiel ou bien dans le domaine temporel.

Cette approche, basée sur une modulation temporelle de polarisation, présente toutefois un certain nombre d'inconvénients. Tout d'abord, la précision de mesure est affectée par les instabilités en intensité de la source de lumière utilisée. De plus, la durée minimale d'une mesure est fixée par la période de modulation de la polarisation et ne peut pas être inférieure à la moitié de la période de modulation. En particulier, l'utilisation d'un modulateur optique de polarisation basé sur un composant tournant peut avoir des inconvénients en termes de génération de vibration mais aussi en termes de fiabilité à long terme et de robustesse. Enfin, lors de l'acquisition d'une série de spectres au cours d'une période de modulation, il n'est généralement pas possible d'ajuster le temps d'acquisition d'un spectre en fonction de son intensité, car la durée d'acquisition d'un spectre est déterminée par la période de modulation. Par conséquent, cette approche ne permet pas d'utiliser le détecteur dans une plage d'intensité favorable de sa dynamique pour la mesure de chaque spectre, évitant la saturation tout en évitant aussi un signal trop faible. De ce fait, il est parfois difficile d'examiner avec un même ellipsomètre monochromatique ou spectroscopique des matériaux présentant des valeurs de réflectivité très différentes ou encore d'utiliser des spots présentant des tailles très différentes.

Le document JP 3269107 décrit un ellipsomètre utilisant six faisceaux correspondant à six états de polarisation distincts pour déduire une mesure spectroscopique d'ellipsométrie. Les documents US 6384916, US 2017/045397 et US 2013/010295 décrivent des appareils d'ellipsométrie utilisant une pluralité de faisceaux correspondant à des états de polarisation distincts.

D'autre part, on connaît du document de brevet WO 2014/016528 A1 un spectro-polarimètre à division de front d'onde qui permet de diviser un faisceau lumineux source en six faisceaux lumineux polarisés et de mesurer simultanément l'intensité des six images spectrales correspondant aux six faisceaux polarisés pour en déduire une mesure spectroscopique de l'état de polarisation du faisceau lumineux source. Toutefois, un polarimètre à division de front d'onde présente l'inconvénient que la répartition de l'intensité lumineuse sur les différentes images spectrales dépend fortement des conditions expérimentales. Ainsi, les valeurs mesurées des intensités lumineuses de chacune des images dépendent non seulement de l'état de polarisation, mais aussi de la distribution d'intensité lumineuse à l'endroit où la division du front d'onde est effectuée. La mesure de l'état de polarisation au moyen d'un tel polarimètre peut être imprécise et/ou entachée d'erreur. De plus, ce document ne décrit pas un ellipsomètre ou un scattéromètre qui nécessite d'analyser l'état de polarisation d'un faisceau lumineux réfléchi, transmis ou diffracté par un échantillon avec un angle d'incidence et un angle réflexion, transmission ou diffraction bien définis.

De manière générale, dans un ellipsomètre ou scattéromètre, pour éviter d'introduire des erreurs de mesure systématiques, il est souhaitable d'éviter l'insertion de tout système optique susceptible de modifier la polarisation du faisceau lumineux, d'une part, entre le polariseur du bras d'illumination et l'échantillon et, d'autre part, entre l'échantillon et l'analyseur de polarisation du bras de détection. De plus, l'insertion d'un système optique est susceptible de réduire l'intensité lumineuse du faisceau, limiter la bande spectrale et/ou modifier la divergence du faisceau lumineux.

Enfin, il est souhaitable d'acquérir des mesures monochromatiques ou spectroscopiques d'ellipsométrie ou de scattérométrie à une cadence pouvant dépasser 50 Hz.

Dans certaines applications, on souhaite acquérir des mesures monochromatiques ou spectroscopiques d'ellipsométrie résolues en fonction du temps, par exemple pour le suivi *in situ* de procédés de croissance, de dépôt ou de gravure de couches minces.

Dans ces applications, il est souhaitable d'éviter l'utilisation de composants optiques tournants du fait des vibrations mécaniques induites par la rotation.

D'autre part, il est souhaitable d'étendre le domaine spectral des mesures d'ellipsométrie ou de scattérométrie tout en maintenant ou en améliorant la qualité de ces mesures.

OBJET DE L'INVENTION

Afin de remédier aux inconvénients précités de l'état de la technique, la présente invention propose un ellipsomètre ou scattéromètre.

Plus particulièrement, on propose selon l'invention un ellipsomètre comprenant une source de lumière adaptée pour générer un faisceau lumineux source, un polariseur adapté pour recevoir le faisceau lumineux source et former un faisceau lumineux incident polarisé, un système optique d'illumination adapté pour diriger le faisceau lumineux incident polarisé vers un échantillon suivant un axe optique incident dans un plan d'incidence, un séparateur optique de faisceau à division de front d'onde disposé pour recevoir un faisceau lumineux secondaire formé par réflexion ou transmission du faisceau lumineux incident polarisé sur l'échantillon à un angle d'incidence déterminé, le faisceau lumineux secondaire se propageant suivant un axe optique secondaire dans le plan d'incidence, le séparateur optique de faisceau à division de front d'onde étant orienté pour former trois faisceaux divisés collimatés se propageant suivant trois axes optiques distincts séparés angulairement dans un plan transverse au plan d'incidence et un dispositif optique de modification de polarisation adapté pour recevoir les trois faisceaux divisés collimatés et former trois faisceaux polarisés suivant trois états de polarisation distincts, un dispositif optique séparateur de polarisation disposé et orienté pour recevoir les trois faisceaux polarisés suivant trois états de polarisation distincts et pour former six faisceaux séparés se propageant suivant six axes optiques séparés angulairement dans le plan transverse au plan d'incidence, un système de détection adapté pour détecter les six faisceaux séparés et un système de traitement adapté pour en déduire une mesure d'ellipsométrie.

L'ellipsomètre permet d'acquérir une mesure d'ellipsométrie instantanée sans modulation de la polarisation. La durée d'acquisition d'une mesure d'ellipsométrie peut être adaptée aisément en fonction de l'intensité de chacun des six faisceaux détectés.

Selon un aspect particulier, l'ellipsomètre est monochromatique.

Selon un autre aspect particulier, le système de détection comprend au moins un spectromètre adapté pour détecter les six faisceaux séparés.

Selon un mode de réalisation particulier, l'ellipsomètre comprend un système optique de focalisation disposé pour recevoir les six faisceaux séparés et former six images alignées et séparées spatialement, et ledit au moins un spectromètre comprend un spectromètre imageur comprenant une fente d'entrée allongée suivant une direction et disposée pour recevoir simultanément les six images, le spectromètre imageur étant adapté pour disperser spectralement les six images et former simultanément six sous-images spectrales séparés spatialement sur un détecteur d'image, le détecteur d'image étant adapté pour acquérir une image des six sous-images spectrales et le système de traitement étant adapté pour traiter l'image des six sous-images spectrales et pour en déduire une mesure spectroscopique d'ellipsométrie.

La durée d'acquisition d'une mesure spectroscopique peut être adaptée aisément en fonction de l'intensité des sous-images spectrales détectées.

Selon un premier mode de réalisation, le système optique d'illumination est adapté pour focaliser le faisceau lumineux incident polarisé sur l'échantillon et le séparateur optique de faisceau à division de front d'onde comporte une lentille segmentée comportant trois segments de lentilles ayant une même longueur focale et des axes optiques parallèles entre eux et séparés spatialement, chaque segment de lentille ayant un point focal objet, les trois segments de lentilles étant assemblés de façon à ce que lesdits trois points focaux objet soient alignés sur l'échantillon transversalement au plan d'incidence, chaque segment de lentille étant disposé pour recevoir une partie distincte du faisceau secondaire et former un faisceau divisé collimaté, les trois segments de lentilles étant assemblés de façon à ce que lesdits trois faisceaux divisés se propagent suivant les trois axes optiques distincts.

Selon un deuxième mode de réalisation, le système optique d'illumination est adapté pour collimater le faisceau lumineux incident polarisé sur l'échantillon et le séparateur optique de faisceau à division de front d'onde comporte au moins deux prismes ayant leurs arêtes disposées parallèlement au plan d'incidence, chaque prisme étant disposé pour recevoir une partie distincte du faisceau secondaire et former un faisceau divisé collimaté se propageant suivant un axe optique dévié angulairement par rapport à l'axe optique secondaire, les au moins deux prismes étant orientés et assemblés de façon à ce que lesdits trois faisceaux divisés collimatés se propagent suivant les trois axes optiques distincts.

D'autres caractéristiques non limitatives et avantageuses de l'ellipsomètre ou du scattéromètre conforme à l'invention, prises individuellement ou selon toutes les combinaisons techniquement possibles, sont les suivantes :

- le séparateur optique de faisceau à division de front d'onde comporte en outre un masque comporte trois ouvertures séparées spatialement ;
- le dispositif optique de modification de polarisation comporte au moins deux lames d'onde, de préférence achromatiques, chaque lame d'onde ayant une retardance distincte, une lame d'onde étant disposée sur l'un des trois faisceaux divisés et une autre lame d'onde étant disposée sur un autre des trois faisceaux divisés ;
- le dispositif optique séparateur de polarisation comporte un prisme de Wollaston, un prisme de Rochon, un prisme de Sénarmont ou une lame d'onde diffractive ;
- le séparateur optique de faisceau à division de front d'onde est adapté pour séparer angulairement les trois faisceaux divisés d'un angle ALPHA entre faisceaux divisés adjacents et le dispositif optique séparateur de polarisation est adapté pour séparer angulairement les six faisceaux séparés d'un angle BETA entre faisceaux séparés adjacents, l'angle BETA étant compris entre 0,6*ALPHA/2 et 1,5*ALPHA/2;
- la source de lumière comporte une lampe halogène, une lampe flash xénon, une source laser supercontinuum et/ou un laser à fibre optique et/ou une source à impulsions ;
- la source de lumière est une source laser supercontinuum et comporte en outre une lentille cylindrique disposée sur le trajet optique du faisceau secondaire en amont de la fente d'entrée du spectromètre imageur, la lentille cylindrique étant adaptée et orientée pour élargir les six images transversalement à la direction allongée de la fente d'entrée.

De façon avantageuse, l'ellipsomètre ou scattéromètre comporte un premier diaphragme source, le système optique d'illumination étant adapté pour former une première image du premier diaphragme source sur l'échantillon et/ou comporte un deuxième diaphragme source, le système optique d'illumination étant adapté pour former une deuxième image du deuxième diaphragme source sur l'échantillon, le rapport de surface entre le premier diaphragme source et le deuxième diaphragme source étant supérieur ou égal à 10.

Selon un mode de réalisation particulier et avantageux, la source de lumière est adaptée pour générer une première série de N1 impulsions lumineuses, où N1 est un nombre entier naturel, le détecteur d'image étant adapté pour acquérir une première image des six sous-images spectrales de la première série de N1 impulsions lumineuses sans saturation du détecteur d'image, la source de lumière étant adaptée pour générer une deuxième série de N2 impulsions lumineuses, où N2 est un nombre entier naturel, N2 étant compris entre N1+1 et 25.N1, le détecteur d'image étant adapté pour acquérir une deuxième image de la deuxième série de N2 impulsions lumineuses avec saturation du détecteur d'image sur une première partie des six sous-images spectrales et sans saturation du détecteur d'image sur une deuxième partie des six sous-images spectrales, et dans lequel système de traitement est adapté pour combiner la première partie des six sous-images spectrales de la première image avec la deuxième partie des six sous-images spectrales de la deuxième image pour en déduire la mesure spectroscopique d'ellipsométrie.

De façon particulière et avantageuse, au moins deux sous-images spectrales sont séparées spatialement l'une de l'autre par une zone intermédiaire et le système de traitement d'image est adapté pour mesurer une intensité lumineuse parasite dans la zone intermédiaire et pour soustraire ladite intensité lumineuse parasite d'au moins une partie de l'image des six sous-images spectrales.

Selon un aspect particulier, l'ellipsomètre comporte en outre un système de déplacement d'un porte-échantillon, la source de lumière étant adaptée pour générer une série d'impulsions lumineuses, le système de détection étant adapté pour acquérir une série d'acquisitions des six faisceaux séparés correspondant à la série d'impulsions lumineuses pendant un déplacement du porte-échantillon, et le système de traitement est adapté pour traiter la série d'acquisitions et pour en déduire une série de mesures d'ellipsométrie en fonction du déplacement du porte-échantillon.

Selon un autre aspect particulier, l'ellipsomètre ou scattéromètre comporte une source de lumière auxiliaire adaptée pour éclairer une surface de l'échantillon et/ou une caméra auxiliaire adaptée pour acquérir au moins une image de l'échantillon.

L'invention propose également un procédé de mesure d'ellipsométrie comprenant les étapes suivantes :

- générer un faisceau lumineux incident polarisé ;
- diriger le faisceau lumineux incident polarisé vers un échantillon suivant un axe optique incident dans un plan d'incidence ;
- recevoir un faisceau secondaire formé par réflexion ou transmission du faisceau lumineux incident polarisé sur l'échantillon à un angle d'incidence déterminé, le faisceau secondaire se propageant suivant un axe optique secondaire dans le plan d'incidence,
- séparer optiquement le faisceau secondaire par division de front d'onde de façon à former trois faisceaux divisés collimatés se propageant suivant trois axes optiques distincts, les trois axes optiques distincts étant séparés angulairement dans un plan transverse au plan d'incidence,
- modifier la polarisation d'au moins deux des trois faisceaux divisés collimatés de façon à former trois faisceaux polarisés suivant trois états de polarisation distincts ;
- séparer en polarisation les trois faisceaux polarisés de façon à former six faisceaux séparés se propageant suivant six axes optiques séparés angulairement dans un plan transverse au plan d'incidence ;
- détecter les six faisceaux séparés pour en déduire une mesure d'ellipsométrie.

Selon un aspect particulier, le procédé comporte les étapes supplémentaires suivantes :

- focaliser simultanément les six faisceaux séparés en six images alignées et séparées spatialement sur une fente d'entrée d'un spectromètre;
- disperser spectralement les six images pour former simultanément six sous-images spectrales séparées spatialement sur un détecteur d'image;
- acquérir une image des six sous-images spectrales et
- traiter l'image des six sous-images spectrales pour en déduire une mesure spectroscopique d'ellipsométrie ou de scattérométrie.

L'invention concerne aussi un scattéromètre comprenant une source de lumière adaptée pour générer un faisceau lumineux source, un polariseur adapté pour recevoir le faisceau lumineux source et former un faisceau lumineux incident polarisé, un système optique d'illumination adapté pour diriger le faisceau lumineux incident polarisé vers un échantillon suivant un axe optique incident dans un plan d'incidence, un séparateur optique de faisceau à division de front d'onde disposé pour recevoir un faisceau lumineux secondaire formé par diffraction du faisceau lumineux incident polarisé sur l'échantillon à un angle d'incidence déterminé, le faisceau lumineux secondaire se propageant suivant un axe optique secondaire dans le plan d'incidence, le séparateur optique de faisceau à division de front d'onde étant orienté pour former trois faisceaux divisés collimatés se propageant suivant trois axes optiques distincts séparés angulairement dans un plan transverse au plan d'incidence, un dispositif optique de modification de polarisation adapté pour recevoir les trois faisceaux divisés collimatés et former trois faisceaux polarisés suivant trois états de polarisation distincts, un dispositif optique séparateur de polarisation disposé et orienté pour recevoir les trois faisceaux polarisés suivant trois états de polarisation distincts et pour former six faisceaux séparés se propageant suivant six axes optiques séparés angulairement dans le plan transverse au plan d'incidence, et un système de détection adapté pour détecter les six faisceaux séparés et un système de traitement pour en extraire une mesure de scattérométrie.

Selon un mode de réalisation particulier, le scattéromètre comprend un système optique de focalisation disposé pour recevoir les six faisceaux séparés et former six images alignées et séparées spatialement, et un spectromètre imageur comprenant une fente d'entrée allongée suivant une direction et disposée pour recevoir simultanément les six images, le spectromètre imageur étant adapté pour disperser spectralement les six images et former simultanément six sous-images spectrales séparés spatialement sur un détecteur d'image, le détecteur d'image étant adapté pour acquérir une image des six sous-images spectrales et le système de traitement étant adapté pour traiter l'image des six sous-images spectrales et pour en déduire une mesure spectroscopique de scattérométrie.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement une vue en coupe d'un ellipsomètre ou scattéromètre selon un premier mode de réalisation, en configuration de faisceau incident focalisé sur l'échantillon ;
- la figure 2 représente schématiquement une vue suivant une coupe BB du bras de détection de l'ellipsomètre ou scattéromètre illustré en figure 1 ;

- la figure 3 représente schématiquement une vue de face d'un premier masque du séparateur optique de faisceau à division de front d'onde ;
- la figure 4 représente schématiquement une vue en perspective d'une lentille segmentée utilisée dans le bras de détection sur les figures 1 et 2 ;
- la figure 5 représente schématiquement une vue en 3D d'un ellipsomètre ou scattéromètre spectroscopique selon le premier mode de réalisation ;
- la figure 6 représente schématiquement une vue en coupe d'un ellipsomètre ou scattéromètre selon un deuxième mode de réalisation, en configuration de faisceau incident collimaté ;
- la figure 7 représente schématiquement une vue suivant une coupe CC du bras de détection de l'ellipsomètre ou scattéromètre illustré en figure 6 ;
- la figure 8 représente schématiquement une image spectro-polarimétrique d'un diaphragme source à travers un ellipsomètre ou scattéromètre spectroscopique selon l'un des modes de réalisation sans aberrations optiques ;
- la figure 9 représente schématiquement une image spectro-polarimétrique d'un diaphragme source à travers un ellipsomètre ou scattéromètre spectroscopique selon l'un des modes de réalisation, intégrant des aberrations optiques ;
- la figure 10 représente schématiquement une vue en coupe d'un ellipsomètre ou scattéromètre avec source d'éclairage auxiliaire et visualisation auxiliaire ;
- la figure 11 représente schématiquement un exemple de sous-images spectrales utilisées pour former une image de PSI et une image de DELTA d'un échantillon ;
- la figure 12 illustre un exemple d'image de visualisation auxiliaire avec spot d'ellipsométrie en superposition avec une image de l'échantillon.

Dispositif et Procédé

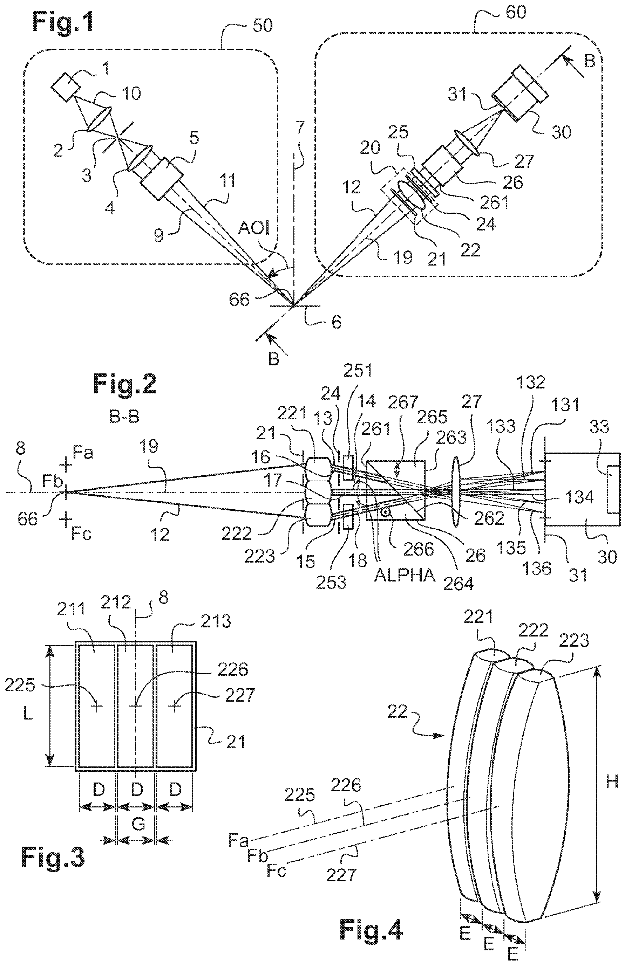

Sur les figures 1 à 5, on a représenté un ellipsomètre ou scattéromètre selon un premier mode de réalisation.

L'ellipsomètre ou scattéromètre comporte un bras d'illumination 50 et un bras de détection 60 disposés de part et d'autre d'un échantillon 6 que l'on souhaite mesurer. Le bras d'illumination 50 comporte une source de lumière 1, un premier système optique 2, un diaphragme source 3, un autre système optique 4 de focalisation et un polariseur 5. De préférence, le polariseur 5 est disposé en aval du système optique de focalisation 4. De façon alternative, le polariseur 5 peut être disposé en amont du système optique 4 de focalisation ou entre différents composants du système optique de focalisation 4.

La source de lumière 1 émet un faisceau lumineux source 10 de préférence dans une gamme de longueur d'onde spectralement étendue, par exemple de 360 nm à 700 nm pour une lampe flash xénon. Le premier système optique 2 forme l'image de la source sur le diaphragme source 3. De façon alternative, on utilise une source de lumière fibrée dont l'extrémité forme le diaphragme source 3. La source de lumière 1 peut être une source émettant un rayonnement lumineux continu en fonction du temps ou pulsé comme détaillé plus loin. La source de lumière 1 comprend par exemple une lampe halogène, une lampe flash xénon, une source laser supercontinuum et/ou un laser à fibre optique. En variante, La source de lumière 1 émet un faisceau lumineux source 10 monochromatique.

Le polariseur 5 reçoit le faisceau lumineux source 10 et forme un faisceau lumineux incident polarisé 11. Le système optique de focalisation 4 forme l'image du diaphragme source 3 sur l'échantillon 6 de manière à ce que le faisceau lumineux incident polarisé 11 éclaire l'échantillon 6 sur une zone spatialement limitée. Le faisceau lumineux incident polarisé 11 se propage suivant un axe optique incident 9 vers l'échantillon.

Dans le premier mode de réalisation, le faisceau lumineux incident polarisé 11 est un faisceau focalisé sur l'échantillon, autrement dit un faisceau convergent correspondant à un front d'onde sphérique.

L'axe optique 9 du faisceau lumineux incident polarisé 11 et la normale 7 à l'échantillon définissent un plan d'incidence 8 qui est ici confondu avec le plan de la figure 1. Le polariseur 5 est par exemple un polariseur de type Rochon dont l'axe de polarisation est orienté à 45 degrés du plan d'incidence.

Le diaphragme source 3 est disposé dans un plan transverse à l'axe optique incident 9 et comporte une ouverture inscrite dans un rectangle ayant une dimension perpendiculaire au plan d'incidence, notée WI,s, et une dimension parallèle au plan d'incidence, notée WI,p. A titre d'exemple, le diaphragme source 3 comporte une ouverture rectangulaire de dimensions WI,s et WI,p, disposée devant une lampe ou sur l'image de la région émissive d'une lampe.

Le bras de détection 60 analyse un faisceau lumineux secondaire 12 formé par réflexion, transmission ou diffraction du faisceau lumineux incident polarisé 11 sur l'échantillon 6. Lorsque le faisceau lumineux secondaire 12 est réfléchi, respectivement transmis par l'échantillon 6, on parle d'un ellipsomètre en réflexion, respectivement en transmission. Lorsque le faisceau lumineux secondaire 12 est diffracté sur l'échantillon 6, on parle alors d'un scattéromètre.

Le faisceau lumineux secondaire 12 se propage suivant un axe optique secondaire 19 dans le plan d'incidence 8. Dans un ellipsomètre, l'angle entre l'axe optique secondaire 19 et la normale 7 à l'échantillon est égal en valeur absolue à l'angle d'incidence (AOI). Dans un scattéromètre, l'angle entre l'axe optique secondaire 19 et la normale 7 à l'échantillon est généralement différent de l'angle d'incidence.

Dans le premier mode de réalisation, le faisceau lumineux secondaire 12 est un faisceau divergent correspondant à un front d'onde sphérique.

La figure 2 représente schématiquement le bras de détection 60 selon le premier mode de réalisation dans un plan de coupe BB transverse au plan d'incidence 8 et qui comprend l'axe optique secondaire 19. Le bras de détection 60 comporte un séparateur optique de faisceau à division de front d'onde 20, un dispositif optique de modification de polarisation 25, un dispositif optique séparateur de polarisation 26, un système optique de focalisation 27 et un système de détection. Dans le cas d'un ellipsomètre ou scattéromètre spectroscopique, le système de détection comporte au moins un spectromètre 30. De façon particulièrement avantageuse, le spectromètre 30 est de type spectromètre imageur.

Plus précisément, dans le premier mode de réalisation, le séparateur optique de faisceau à division de front d'onde 20 comporte un premier masque 21 et une lentille segmentée 22. De façon optionnelle, le séparateur optique de faisceau à division de front d'onde 20 comporte un deuxième masque 24 disposé entre la lentille segmentée 22 et le dispositif optique séparateur de polarisation 26.

La figure 3 illustre une vue de face du premier masque 21 comportant trois ouvertures 211, 212, 213 séparées spatialement l'une de l'autre et entourées par des barreaux opaques. Le premier masque 21 est par exemple formé dans une plaque mince en nickel noirci; la plaque ayant une épaisseur comprise entre 12 $\mu$m et 80 $\mu$m. Les trois ouvertures 211, 212, 213 sont disposées dans un plan transverse à l'axe optique secondaire 19. Dans l'exemple représenté, l'ouverture centrale 212 du masque 21 est disposée dans le plan d'incidence 8, les ouvertures latérales 211 et 213 étant disposées symétriquement par rapport au plan d'incidence. De préférence, les trois ouvertures 211, 212, 213 sont de forme rectangulaire et disposées côte à côte, avec un côté parallèle au plan d'incidence et l'autre côté perpendiculaire au plan d'incidence. A titre d'exemple, les trois ouvertures 211, 212, 213 ont une largeur D prise transversalement au plan d'incidence de 2 mm, une longueur L dans le plan d'incidence de 1,5 mm et une distance G entre ouvertures adjacentes de 0,5 mm. La distance G correspond à l'épaisseur des barreaux opaques.

Les ouvertures 211, 212, 213 du masque 1 ont une longueur L limitée afin de délimiter l'angle d'incidence du faisceau secondaire 12. De façon alternative, au moins un autre diaphragme d'ouverture est disposé sur le bras d'illumination et/ou, respectivement, sur le bras de détection pour délimiter l'angle d'incidence du faisceau incident et/ou, respectivement, du faisceau réfléchi, transmis ou diffracté.

La lentille segmentée 22 est illustrée en figure 4. La lentille segmentée 22 est formée d'un assemblage de trois segments de lentilles 221, 222, 223 de même longueur focale. Les trois segments de lentilles 221, 222, 223 peuvent être prélevés dans une même lentille sphérique ou dans trois lentilles sphériques similaires. Les segments de lentilles 221, 222, 223 sont découpés dans un matériau isotrope (non biréfringent) et réassemblées de manière à éviter la formation de biréfringences susceptibles de modifier la polarisation des faisceaux. Les segments de lentilles 221, 222, 223 sont par exemple collés. La découpe et le réassemblage des segments de lentilles doivent être faits de sorte que les surfaces de jonction entre les pans soient parallèles entre eux, et disposées parallèlement au plan d'incidence. La lentille segmentée 22 est une lentille à foyers multiples. La lentille segmentée à trois foyers utilisée ici n'est pas une variété particulière de ce qui est habituellement désigné par lentille, mais au contraire un composant optique différent et particulier.

On note Fa, respectivement Fb, Fc, le point focal objet du segment de lentille 221, respectivement 222, 223, sur l'axe optique 225, respectivement 226, 227. La lentille segmentée 22 est agencée de manière à ce que les trois axes optiques 225, 226, 227 soient parallèles entre eux et les trois points focaux objet Fa, Fb et Fc soient alignés suivant une direction transverse au plan d'incidence, au moins un point focal objet Fa, Fb, Fc étant sur l'échantillon 6. Par exemple, l'axe optique du segment de lentille 222 central est aligné avec l'axe optique 19 du faisceau secondaire 12 et le point focal objet Fb est à l'intersection du faisceau lumineux secondaire 12 sur l'échantillon 6. Autrement dit, le point focal objet Fb est situé sur le spot 66 du faisceau focalisé sur l'échantillon.

A titre d'exemple non limitatif, les trois segments de lentilles 221, 222, 223 ont une longueur focale de 100 mm, une hauteur H dans le plan d'incidence de 3 mm et une épaisseur E prise transversalement au plan d'incidence de 2 mm.

Le premier masque 21 est de préférence disposé à proximité de la face avant de la lentille segmentée 22, de manière à ce que l'axe optique 225, respectivement 226, 227 passe par l'ouverture 211, respectivement 212, 213 du premier masque 21. Ainsi, le premier masque 21 en combinaison avec la lentille segmentée divise le front d'onde du faisceau lumineux secondaire 12 en trois faisceaux lumineux divisés. La largeur D des ouvertures 221, 222, 223 et l'épaisseur G des barreaux opaques du premier masque 21 sont adaptées en fonction de l'épaisseur E des segments de lentilles 221, 222, 223 de manière à ce que chaque segment de lentille de la lentille segmentée 22 reçoit un et un seul faisceau divisé. Le segment de lentille 221, respectivement 222, 223 collimate le faisceau divisé 13, respectivement 14, 15. Le segment de lentille 221 forme un premier faisceau divisé 13 qui est collimaté et se propage suivant un axe optique incliné d'un angle ALPHA par rapport à l'axe optique 19 du faisceau secondaire 12. Le segment de lentille 222 forme un deuxième faisceau divisé 14 qui est collimaté et se propage suivant l'axe optique 19 du faisceau secondaire 12. Le segment de lentille 223 forme un troisième faisceau divisé 15 qui est collimaté et se propage suivant un axe optique incliné de préférence symétriquement d'un angle -ALPHA par rapport à l'axe optique 19 du faisceau secondaire 12.

Ainsi, les trois faisceaux divisés 13, 14, 15 collimatés se propageant suivant trois axes optiques distincts 16, 17, 18. Les trois faisceaux divisés 13, 14, 15 collimatés présentent chacun un front d'onde plane. Les trois axes optiques distincts 16, 17, 18 sont dans le plan de la figure 2 transverse au plan d'incidence. Deux faisceaux adjacents quelconques parmi les trois faisceaux divisés 13, 14, 15 collimatés sont séparés angulairement d'un angle ALPHA en sortie du séparateur optique de faisceau à division de front d'onde 20.

Selon une variante du premier mode de réalisation, on utilise un système optique comportant une combinaison d'une lentille segmentée et d'une ou plusieurs lentilles conventionnelles divergentes ou convergentes pour obtenir une séparation angulaire du faisceau secondaire en au moins trois faisceaux.

De façon optionnelle, on dispose un deuxième masque 24 à trois ouvertures similaire au masque 21 pour bloquer les diffusions parasites dans la lentille segmentée 22. Le deuxième masque 24 a une structure analogue au premier masque 21, avec trois ouvertures séparées par des barreaux opaques avec la même orientation que le premier masque 21.

Le dispositif optique de modification de polarisation 25 est placé entre la lentille segmentée 22 et le dispositif optique séparateur de polarisation 26. Le dispositif optique de modification de polarisation 25 comporte au moins deux lames d'onde 251, 253 biréfringentes introduisant une retardance différente l'une de l'autre. Dans l'exemple illustré sur la figure 2, une lame d'onde 251 biréfringente est insérée sur le trajet optique du premier faisceau divisé 13 collimaté et une autre lame d'onde 253 biréfringente est insérée sur le trajet optique du troisième faisceau divisé 15 collimaté. Dans cet exemple, aucune lame d'onde n'est disposée sur le trajet du deuxième faisceau divisé 14 collimaté. A titre d'exemple, la lame d'onde 251 est une lame demi-onde achromatique ayant son axe orienté à environ 22,5 degrés du plan d'incidence et l'autre lame d'onde 253 est une lame quart d'onde achromatique ayant son axe orienté dans le plan d'incidence. Les lames d'onde 251, 253 ne modifient pas l'axe optique de propagation des faisceaux divisés 13, 15 collimatés, mais uniquement la polarisation des faisceaux divisés 13, 15 collimatés. De plus, les lames d'onde 251, 253 introduisent une retardance qui est constante en fonction du temps. Les lames d'onde 251, 253 n'introduisent donc pas une modulation de polarisation en fonction du temps.

En sortie du dispositif optique de modification de polarisation 25, on obtient ainsi trois faisceaux collimatés et polarisés suivant trois états de polarisation distincts se propageant suivant trois axes optiques 16, 17, 18 dans un plan transverse au plan d'incidence.

Le dispositif optique séparateur de polarisation comporte ici un prisme de Wollaston 26. Le prisme de Wollaston 26 est placé en aval du dispositif optique de modification de polarisation 25. La face d'entrée 261 du prisme de Wollaston 26 est transverse et centrée sur l'axe optique du deuxième faisceau divisé 14 collimaté. Ainsi disposé, le prisme de Wollaston 26 intercepte les premier, deuxième et troisième faisceaux lumineux divisés 13, 14, 15 collimatés et polarisés suivant trois états de polarisation distincts incidents sur sa face d'entrée 261.

Le prisme de Wollaston 26 est ici formé de deux prismes droits 264, 265 accolés entre eux au niveau d'une interface plane de séparation 262. Le prisme de Wollaston sépare en polarisation chaque faisceau incident 13, 14, 15 suivant un plan de séparation perpendiculaire au plan d'incidence. Le plan de la figure 2 correspond au plan de séparation. On note BETA l'angle de séparation entre deux faisceaux séparés en polarisation en sortie du prisme de Wollaston 26 issus d'un même faisceau incident collimaté. Le prisme de Wollaston 26 est choisi de manière à ce que l'angle BETA soit compris entre 0,6*ALPHA/2 et 1,5*ALPHA/2. De préférence BETA est choisi égal à ALPHA /2. Par exemple, l'angle BETA est égal à 2,65 degrés pour la longueur d'onde de 589 nm. Le prisme de Wollaston peut être par exemple formé de deux prismes en quartz, en borate de baryum, en cristal de calcite avec un angle de séparation BETA de 2,65 degrés ou en fluorure de magnésium avec un angle de séparation BETA de 0,75 degré.

Selon un premier type de prisme de Wollaston, la polarisation des faisceaux séparés est respectivement parallèle et perpendiculaire au plan de séparation. On préfère ici utiliser un autre type de Wollaston, dans lequel les polarisations des deux faisceaux issus de la séparation de polarisation est à 45 degrés du plan de séparation. La raison de cette préconisation de séparer en polarisation les faisceaux à + 45 degrés ou -45 degrés du plan de séparation est la suivante : on sait qu'un spectromètre à réseau de diffraction a une efficacité qui dépend de la polarisation. Dans le cas d'un prisme de Wollaston selon le premier type, la polarisation des faisceaux séparés par l'étage polarimétrique est alors parallèle ou perpendiculaire aux traits du réseau, selon le faisceau considéré. Deux faisceaux d'intensité identique et de polarisation différente, produisent alors des signaux différents sur le capteur d'image du spectromètre imageur, du fait de cette efficacité différente selon la polarisation. Au contraire, en séparant la polarisation des faisceaux à + 45 degrés ou -45 degrés du plan de séparation, les faisceaux de polarisation différente sont diffractés avec la même efficacité par le réseau de diffraction, et ceci, indépendamment de leur polarisation $I_{i,+}$ ou $I_{i,-}$ où l'indice i=1,2,3 désigne un des faisceaux divisés 13, 14, 15 par le séparateur optique à division de front d'onde, l'indice + représente la composante à + 45 degrés et l'indice - représente la composante à -45 degrés séparées par le prisme de Wollaston. Cette propriété est utile afin d'obtenir des valeurs d'ellipsométrie ou de scattérométrie de la forme $\delta_i = (I_{i,+} - I_{i,-})/(I_{i,+} + I_{i,-})$ qui ne soient pas entachée d'une erreur liée à la différence d'efficacité du réseau de diffraction en fonction de la polarisation. Lorsqu'il est possible de corriger la réponse des différentes voies au moyen d'une calibration adéquate, cette configuration préconisée permet soit de ne pas effectuer cette calibration, soit, si on la réalise tout de même, d'avoir des coefficients de calibration qui sont moins sensibles à des causes d'erreurs tels que la dépendance de ces coefficients avec la longueur d'onde.

Dans l'exemple illustré sur la figure 2, selon le premier type de prisme de Wollaston, l'axe optique du premier prisme droit 264 est parallèle au plan d'incidence 8 et perpendiculaire aux trois axes optique 16, 17, 18 des trois faisceaux lumineux divisés 13, 14, 15 et l'axe optique du second prisme droit 265 est perpendiculaire au plan d'incidence 8.

Ainsi orienté, le prisme de Wollaston 26 génère, à partir du premier faisceau lumineux divisé 13 collimaté incident sur l'interface de séparation 262, deux faisceaux lumineux polarisés 131, 132 émergents par la face de sortie 263 du prisme de Wollaston 26.

Les deux faisceaux lumineux polarisés 131, 132 sont polarisés selon deux états de polarisation orthogonaux entre eux, de préférence à $\pm45$ degrés. Les deux faisceaux lumineux polarisés 131, 132 se propagent suivant deux directions de propagation séparées angulairement de l'angle de séparation BETA du prisme de Wollaston, ici de 2,65 degrés. Les deux faisceaux lumineux polarisés 131, 132 sont collimatés.

De la même manière, le prisme de Wollaston 26 génère, à partir respectivement du deuxième faisceau lumineux divisé 14 et du troisième faisceau lumineux divisé 15, incidents chacun sur l'interface de séparation 262, deux faisceaux lumineux polarisés 133, 134 et deux faisceaux lumineux polarisés 135, 136, émergents par la face de sortie 265 du prisme de Wollaston 26.

Les deux faisceaux lumineux polarisés 133, 134 (respectivement deux faisceaux lumineux polarisés 135, 136) sont polarisés selon deux polarisations perpendiculaires entre elles et se propagent suivant deux directions de propagation différentes séparées de l'angle de séparation BETA du prisme de Wollaston 26.

Ainsi, le prisme de Wollaston 26 génère au total six faisceaux lumineux polarisés 131, 132, 133, 134, 135, 136.

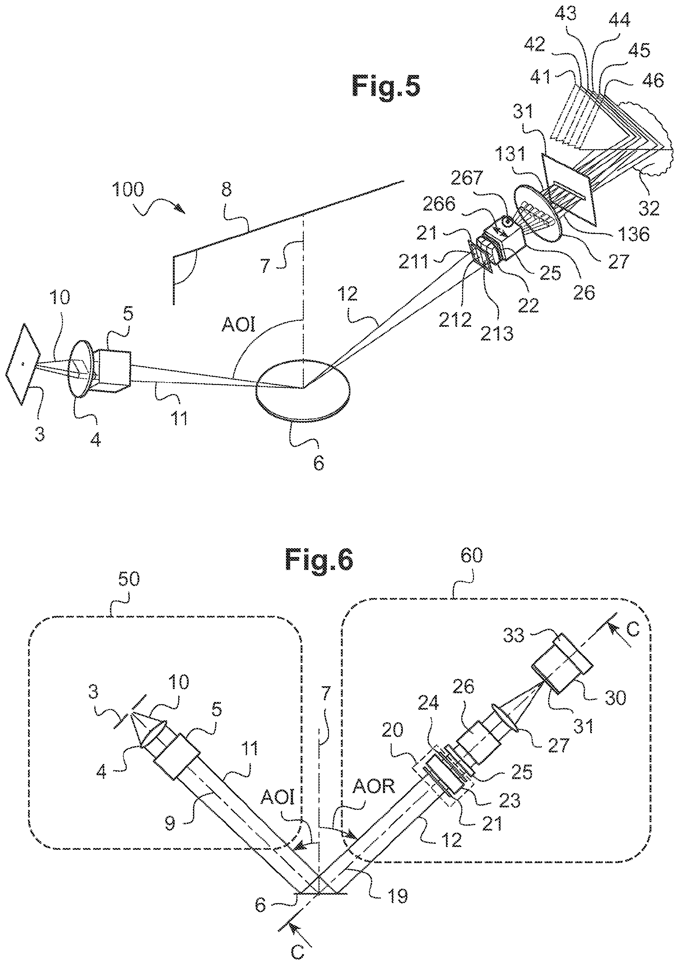

L'angle de séparation du prisme de Wollaston 26 est tel que les six faisceaux lumineux polarisés 131, 132, 133, 134, 135, 136 sont séparés angulairement les uns des autres tout en se propageant dans un plan transverse au plan d'incidence 8 (voir sur la figure 5 en perspective). De façon avantageuse, lorsque BETA= ALPHA/2, deux faisceaux adjacents quelconques parmi les six faisceaux lumineux polarisés 131, 132, 133, 134, 135, 136 sont séparés angulairement de l'angle BETA en sortie du prisme de Wollaston 26.

En variante, à la place d'un prisme de Wollaston, les moyens de séparation de la polarisation 26 peuvent par exemple comprendre un prisme de Rochon, un prisme de Sénarmont ou une lame d'onde diffractive (diffractive wave plate en anglais).

De façon avantageuse, le système optique de focalisation 27 est placé en sortie du prisme de Wollaston 26. Le système optique de focalisation 27 comporte par exemple une lentille ayant une longueur focale de 10 mm. Le système optique de focalisation 27 reçoit les six faisceaux lumineux polarisés 131, 132, 133, 134, 135, 136 collimatés et les focalise en six images 141, 142, 143, 144, 145, 146 sur un système de détection. Dans un exemple, le système de détection comporte plusieurs détecteurs indépendants pour acquérir six mesures d'intensité correspondant aux six faisceaux lumineux polarisés 131, 132, 133, 134, 135, 136. Dans un autre exemple, un détecteur imageur reçoit les six images 141, 142, 143, 144, 145, 146 et acquiert six mesures d'intensité. Dans un exemple particulier d'ellipsomètre ou scatteromètre spectroscopique, les six images 141, 142, 143, 144, 145, 146 sont focalisées sur la fente d'entrée 31 d'un spectromètre imageur 30. Les six images sont séparées spatialement les unes des autres tout en étant alignées suivant une direction transverse au plan d'incidence 8.

Selon un aspect particulier de la présente divulgation, le spectromètre imageur 30 est placé de sorte que sa fente d'entrée 31 soit dans le plan des 6 images, créées par le séparateur optique de faisceau à division de front d'onde 20, le prisme de Wollaston 26 et le système optique de focalisation 27. De préférence, la fente d'entrée 31 est de forme rectangulaire allongée suivant un axe parallèle à la direction d'alignement des six images 141, 142, 143, 144, 145, 146, c'est-à-dire perpendiculaire au plan d'incidence 8.

Un spectromètre imageur 30 est une variété connue de spectromètre, qui présente une fente d'entrée 31, de moyens de dispersion et de focalisation, et un capteur d'image 33. L'image obtenue représente un ensemble de spectres correspondant à la lumière entrant à différentes abscisses le long de la fente d'entrée 31. Un exemple de spectromètre imageur est le spectromètre CP140, de la société HORIBA, ou le CP20, de cette même société. Ces spectromètres sont basés sur l'utilisation de réseaux de diffraction concaves corrigés des aberrations chromatiques, qui assurent à la fois la dispersion spectrale et la focalisation des spectres sur le capteur d'image. Il existe d'autres spectromètres imageurs, tels que les spectromètres imageurs de type Offner, qui sont également adaptés pour cette utilisation. Le spectromètre imageur est disposé de manière à ce que la direction de dispersion spectrale soit orthogonale à l'axe de la fente d'entrée. Dans le cas d'un spectromètre imageur à réseau de diffraction, les traits du réseau de diffraction 32 sont de préférence parallèles à la fente d'entrée 31.

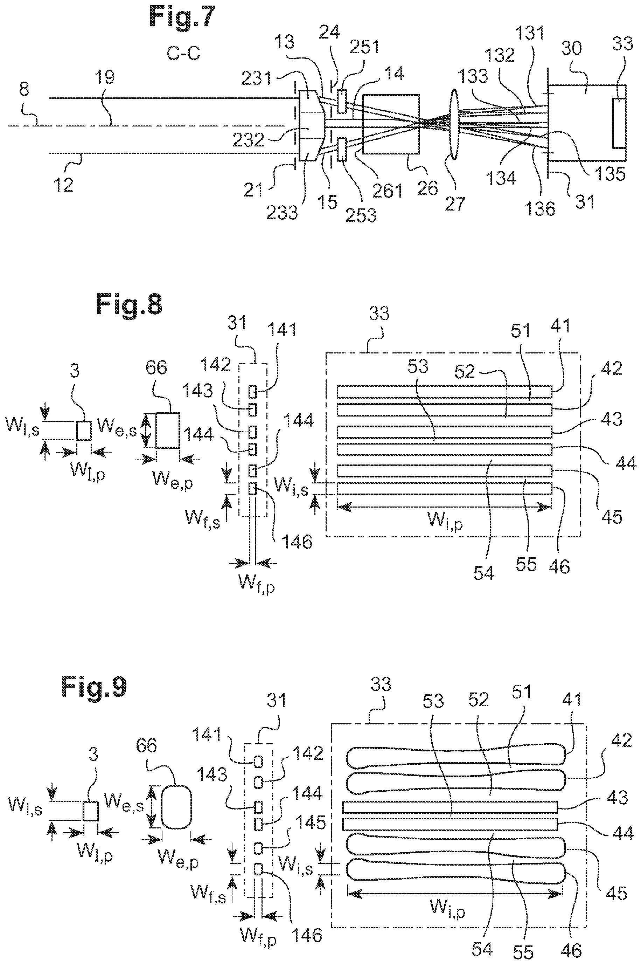

Selon un aspect de la présente divulgation illustré sur la figure 8, les dimensions du diaphragme source 3 et plus précisément la dimension perpendiculaire au plan d'incidence WI,s est suffisamment petite, compte tenu du grandissement des systèmes optiques 2, 4 du bras d'illumination et des systèmes optiques 22 et 27 du bras de détection pour que les 6 images 141, 142, 143, 144, 145, 146 du diaphragme source 3 soient séparées spatialement les unes des autres au niveau du système de détection d'une distance supérieure à leur hauteur Wf,s. En particulier, dans le cas d'un ellipsomètre ou scattéromètre spectroscopique comportant un spectromètre-imageur, les 6 images 141, 142, 143, 144, 145, 146 du diaphragme source 3 sont séparées spatialement dans le plan de la fente d'entrée 31 du spectromètre-imageur d'une distance supérieure à leur hauteur Wf,s. Autrement dit, les 6 images 141, 142, 143, 144, 145, 146 ne se recouvrent pas dans le plan du système de détection ou de la fente d'entrée 31 d'un spectromètre imageur 30. De façon optionnelle mais recommandée, l'autre dimension WI,p du diaphragme source 3 est suffisamment petite pour que l'autre dimension Wf,p de chacune des 6 images 141, 142, 143, 144, 145, 146 parallèlement au plan d'incidence soit inférieure à la largeur de la fente d'entrée 31 du spectromètre imageur 30. Selon la présente divulgation, le réseau de diffraction 32 du spectromètre imageur 30 produit alors sur le capteur d'image 33 une image comportant 6 sous-images spectrales (ou plus) du faisceau secondaire 12. Ces 6 sous-images spectrales, notées 41, 42, 43, 44, 45, 46 sont spatialement disjointes sur la surface du capteur d'image 33. Chaque sous-image spectrale 4j correspond à une image 14j étalée spectralement.

Le capteur d'image 33 a une surface de détection adaptée pour enregistrer une image des 6 sous-images spectrales 41, 42, 43, 44, 45, 46. Le capteur d'image 33 comprend par exemple une caméra CMOS à niveaux de gris comprenant n lignes et m colonnes de pixels. Par exemple, on utilise une caméra Sony CMOS noir et blanc comprenant 1200x1920 pixels et on utilise une surface d'environ 400x1800 pixels pour une lecture plus rapide. Chaque pixel a une surface de 5,86x5,86 $\mu$m. Chaque sous-image spectrale 4j (où j=1, ..., 6) s'étend sur au moins une ligne de pixels. La caméra CMOS est sélectionnée pour avoir une densité de puits élevée, de préférence une densité de puits supérieure ou égale à 800 électrons/$\mu$m$^2$. Le capteur d'image 33 fonctionne à une fréquence d'acquisition d'image du hertz, à 50 Hz, 100 Hz ou même supérieure ou égale à 200 Hz.

L'ellipsomètre ou scattéromètre comporte aussi un système de traitement d'image, qui est adapté pour appliquer les étapes suivantes:

Additionner tous les pixels d'une même colonne d'une sous-image spectrale correspondant à une même longueur d'onde, de façon à obtenir 6 (ou plus) spectres en intensité ;

calculer les rapports $\delta_i=(I_{i,+} - I_{i,-})/(I_{i,+} + I_{i,-})$ pour chaque longueur d'onde et chaque indice i, où i=1,2,3 et dans lequel l'indice 1,+ correspond à la sous-image spectrale 41, l'indice 1,- à la sous-image spectrale 42, l'indice 2,+ à la sous-image spectrale 43, l'indice 2,- à la sous-image spectrale 44, l'indice 3,+ à la sous-image spectrale 45, l'indice 3,- à la sous-image spectrale 46, ;

Calculer le vecteur de Stokes réduit, c'est à dire le vecteur de Stokes divisé par sa première composante, en multipliant le vecteur $(\delta_1, \delta_2, \delta_3)$ par une matrice appropriée. Cette matrice aura été déterminée par calibration au moyen de mesures sur des états de polarisation connus.

De manière analogue, un ellipsomètre ou scattéromètre monochromatique comporte aussi un système de traitement, qui est adapté pour appliquer les étapes suivantes:

Recevoir les 6 acquisitions en intensité correspondant aux 6 faisceaux polarisés 131, 132, 133, 134, 135, 136;
calculer les rapports d'intensité $\delta_i=(I_{i,+} - I_{i,-})/(I_{i,+} + I_{i,-})$ pour chaque indice i, où i=1,2,3 et dans lequel l'indice 1,+ correspond au faisceau polarisé 131, l'indice 1,- au faisceau polarisé 132, l'indice 2,+ au faisceau polarisé 133, l'indice 2,- au faisceau polarisé 134, l'indice 3,+ au faisceau polarisé 135, l'indice 3,- au faisceau polarisé 136, ;
Calculer le vecteur de Stokes réduit, c'est à dire le vecteur de Stokes divisé par sa première composante, en multipliant le vecteur $(\delta_1, \delta_2, \delta_3)$ par une matrice appropriée. Cette matrice aura été déterminée par calibration au moyen de mesures sur des états de polarisation connus.

L'homme de l'art sait bien ensuite, à partir du vecteur de Stokes mesuré et de la connaissance de l'état de polarisation de la lumière incidente, déterminer les valeurs Psi et Delta, qui sont couramment employées en ellipsométrie. On détermine aussi simultanément un coefficient de dépolarisation, ainsi que des coefficients de diffraction utilisés en scattérométrie.

On obtient ainsi une mesure monochromatique ou spectroscopique d'ellipsométrie ou de scattérométrie qui est instantanée, c'est-à-dire qui repose sur une seule acquisition sur le système de détection, par exemple sur l'acquisition d'une seule image sur un détecteur d'image, sans modulation de polarisation et sans induire de vibration par rotation de composant optique. La fréquence d'acquisition est limitée par la fréquence de lecture du capteur d'image. On peut ainsi effectuer des mesures monochromatiques ou spectroscopiques d'ellipsométrie ou de scattérométrie sur une large bande spectrale à une fréquence d'une à plusieurs dizaines d'hertz ou même supérieure à 100 Hz ou 200 Hz.

Sur les figures 6 et 7, on a représenté un ellipsomètre ou scattéromètre selon un deuxième mode de réalisation. Les mêmes signes de référence désignent des composants ou systèmes analogues à ceux des figures 1 à 5.

De manière analogue au premier mode de réalisation, le bras d'illumination 50 comporte un diaphragme source 3, un système optique 4 et un polariseur 5. Toutefois, à la différence du premier mode de réalisation, le système optique 4 du bras d'illumination 50 est disposé de manière à éclairer l'échantillon 6 avec un faisceau lumineux incident polarisé 11 collimaté et non pas focalisé sur l'échantillon 6. Dans le deuxième mode de réalisation, le faisceau lumineux incident polarisé 11 est un faisceau collimaté sur l'échantillon correspondant à un front d'onde plane. De plus, dans le deuxième mode de réalisation, le faisceau lumineux secondaire 12 formé par réflexion, transmission ou diffraction du faisceau lumineux incident polarisé 11 sur l'échantillon 6 est également un faisceau collimaté correspondant à un front d'onde plane.

La figure 7 représente schématiquement le bras de détection 60 selon le deuxième mode de réalisation dans un plan de coupe CC transverse au plan d'incidence 8 et qui comprend l'axe optique secondaire 19.

Dans le deuxième mode de réalisation, le séparateur optique de faisceau à division de front d'onde 20 comporte un premier masque 21 et au moins deux prismes 231, 233. Le premier masque 21 est analogue à celui décrit en lien avec la figure 3. Le premier masque 21 divise le front d'onde du faisceau lumineux secondaire 12 en trois faisceaux lumineux divisés qui sont ici collimatés. De façon optionnelle, le séparateur optique de faisceau à division de front d'onde 20 comporte un deuxième masque 24 disposé entre les prismes 231, 233 et le dispositif optique séparateur de polarisation 26.

A titre d'exemple, le séparateur optique de faisceau à division de front d'onde 20 comporte un premier prisme 231 disposé face à l'ouverture 211 du masque 21 et un deuxième prisme 233 disposé face à l'ouverture 213 du masque 21. Ainsi, chaque prisme 231, respectivement 233 reçoit un et un seul faisceau divisé 13, respectivement 15. De façon avantageuse, on ne dispose pas de prisme face à une ouverture 212 de manière à laisser passer sans déviation un des trois faisceaux lumineux divisés, dans l'exemple représenté le faisceau divisé 14. Les prismes 231, 233 sont de préférence identiques et orientés de manière à ce que leurs arêtes s'étendent chacune suivant une direction parallèle au plan d'incidence et perpendiculaire à l'axe optique secondaire 19. Par exemple, on utilise un prisme à section triangulaire ou quadrangulaire en silice, avec un angle compris entre 1° et 8° entre la face d'entrée et la face de sortie. De préférence, les prismes 231, 233 sont peu dispersifs spectralement. Les prismes 231, 233 sont de préférence orientés avec leurs bases respectives face à face ou leurs arêtes respectives face à face et séparées d'une distance égale à la distance entre les ouvertures 211 et 213. Ainsi, le premier prisme 231 reçoit le faisceau divisé 13 et le dévie d'un angle ALPHA par rapport à l'axe optique 19 du faisceau secondaire 12 dans un plan transverse au plan d'incidence. De manière symétrique, le deuxième prisme 233 reçoit le faisceau divisé 15 et le dévie d'un angle -ALPHA par rapport à l'axe optique 19 du faisceau secondaire 12 dans un plan transverse au plan d'incidence.

Ainsi, les trois faisceaux divisés 13, 14, 15 collimatés se propageant suivant trois axes optiques distincts 16, 17, 18. En absence de prisme sur le trajet optique du faisceau divisé 14, ce faisceau n'est pas dévié et l'axe optique 17 est confondu avec l'axe optique secondaire 19. Les trois faisceaux divisés 13, 14, 15 collimatés présentent chacun un front d'onde plane. Les trois axes optiques distincts 16, 17, 18 sont dans le plan de la figure 7 transverse au plan d'incidence. De façon avantageuse, deux faisceaux adjacents quelconques parmi les trois faisceaux divisés 13, 14, 15 collimatés sont séparés angulairement d'un angle ALPHA en sortie du séparateur optique de faisceau à division de front d'onde 20.

Selon une variante du deuxième mode de réalisation, on utilise un système optique comportant une combinaison de prismes et d'une ou plusieurs lentilles conventionnelles convergentes pour obtenir une séparation angulaire du faisceau secondaire en au moins trois faisceaux.

Un dispositif optique de modification de polarisation 25 est disposé de manière à modifier la polarisation d'au moins deux des trois faisceaux divisés pour former trois faisceaux collimatés et polarisés suivant trois états de polarisation distincts se propageant suivant les trois axes optiques 16, 17, 18 dans un plan transverse au plan d'incidence.

Le séparateur de polarisation 26 du deuxième mode de réalisation est analogue à celui du premier mode de réalisation et fonctionne de manière similaire pour former six faisceaux polarisés 131, 132, 133, 134, 135, 136 séparés angulairement les uns des autres. Le système optique de focalisation 27 et le spectromètre imageur 30 sont analogues à ceux décrits en lien avec les figures 1, 2 et 7 du premier mode de réalisation.

Dans les deux modes de réalisation décrits ci-dessus, on obtient six faisceaux lumineux polarisés séparés spatialement sur le système de détection. De façon avantageuse, dans le cas d'un ellipsomètre ou scattéromètre spectroscopique comprenant un spectromètre imageur, les six faisceaux lumineux polarisés forment six images sur la fente d'entrée du spectromètre imageur 30.

La figure 8 représente schématiquement une image spectro-polarimétrique d'un diaphragme source à travers un ellipsomètre ou scattéromètre spectroscopique et un échantillon réfléchissant ou transparent selon la configuration choisie. Le diaphragme source 3 (en vue de face sur la figure 8) est inscrit dans une ouverture rectangulaire de dimensions WI,s et WI,p dans un plan transverse à l'axe optique incident 9. Le système optique 4 du bras d'illumination forme sur l'échantillon une image 66 du diaphragme source 3 de dimensions We,s et We,p dans le plan de l'échantillon. Le rapport entre les dimensions We,s et WI,s d'une part et entre les dimensions We,p et WI,p d'autre part dépend du grandissement optique du système optique 4 et de l'angle d'incidence sur l'échantillon 6. Dans le plan de la fente d'entrée 31 du spectromètre imageur 30, on obtient six images 141, 142, 143, 144, 145 et 146 ayant chacune une forme rectangulaire en absence d'aberrations optiques et de dimensions identiques Wf,s et Wf,p. Dans le plan du capteur d'image 33 bidimensionnel du spectromètre imageur 30, on obtient six sous-images spectrales 41, 42, 43, 44, 45 et 46 ayant chacune une forme rectangulaire en absence d'aberrations optiques et de dimensions identiques Wi,s par Wi,p. Les six sous-images spectrales 41, 42, 43, 44, 45 et 46 sont séparées spatialement l'une de l'autre par une ou plusieurs lignes de pixels. Plus précisément, les six sous-images spectrales 41, 42, 43, 44, 45 et 46 sont séparées dans le plan du capteur d'image 33 par au moins cinq zones intermédiaires notées respectivement 51, 52, 53, 54 et 55 où l'intensité détectée est nulle ou très faible. Par nulle ou faible, on entend ici une fois le signal de fond soustrait, que pour chaque longueur d'onde d'intérêt, la valeur du signal dans la zone de séparation soit au moins 10 fois inférieure à la valeur maximale du signal observé sur des pixels correspondant à cette même longueur d'onde, dans n'importe laquelle des 6 sous-images spectrales 41, 42, 43, 44, 45 et 46.

Pour que les six images 141, 142, 143, 144, 145 et 146 soient séparées dans le plan de la fente d'entrée 31 du spectromètre imageur, il est nécessaire que la dimension Wf,s soit suffisamment petite par rapport à l'écart entre deux images adjacentes, par exemple 131 et 132 pour que les images ne se chevauchent pas. A cet effet, la séparation angulaire entre les 6 voies effectuée d'une part par le séparateur optique de faisceau à division de front d'onde 20 et d'autre part par le dispositif optique séparateur de polarisation 26, soit suffisamment élevée pour que les 6 images 141, 142, 143, 144, 145 et 146 soient séparées spatialement dans le plan de la fente d'entrée 31. Dans le cas où les différents systèmes optiques de focalisation et d'imagerie 2, 4, 22, 27 sont sans aberrations, l'homme du métier adaptera sans difficulté particulière les paramètres du séparateur optique de faisceau à division de front d'onde 20 et du dispositif optique séparateur de polarisation 26 en fonction des dimensions du diaphragme source 3 et des longueurs focales des systèmes optiques du bras d'illumination et du bras de détection, pour que les 6 images de la surface source dans le plan de la fente d'entrée 31 du spectromètre imageur ne se recouvrent pas.

Cependant, les systèmes optiques présentent généralement des aberrations optiques géométriques et/ou chromatiques. Comme illustré en figure 9, la largeur Wi,s de chacune des sous-images spectrales 41, 42, 43, 44, 45 et 46 observées sur le capteur du spectromètre imageur est affectée par des aberrations, imperfections et par la génération de lumière parasite provenant du système optique de focalisation 4 et/ou 27, du séparateur optique de faisceau à division de front d'onde 20, du dispositif optique séparateur de polarisation 26 et/ou du spectromètre imageur 30.

Selon un aspect particulier de la présente divulgation, les zones intermédiaires 51, 52, 53, 54 et 55 où l'intensité détectée est nulle ou très faible sont mises à profit pour assurer qu'il n'existe pas d'intermodulation (cross talk en anglais) entre les 6 sous-images spectrales associées aux 6 informations complémentaires de polarisation. D'autre part, même en absence d'intermodulation, il existe toujours un certain niveau de lumière parasite. Cette lumière parasite correspond au fait que des zones très éclairées de l'image engendrent un éclairement parasite qui s'étend au-delà de la seule zone très éclairée. Il est difficile d'abaisser le niveau de lumière parasite en dessous de 0,5% dans un spectromètre compact. Or, dans un ellipsomètre, on demande généralement une exactitude de mesure meilleure que 0,1%. Il est alors avantageux de pouvoir déterminer puis soustraire la lumière parasite. Pour cela, on utilise le fait que la lumière parasite est en général peu focalisée, c'est-à-dire que le niveau de lumière parasite évolue lentement en fonction des coordonnées spatiales. Les zones intermédiaires 51, 52, 53, 54 et 55 ne reçoivent théoriquement aucun signal. Selon un aspect particulier de la présente divulgation, on mesure le signal dans une ou plusieurs zones intermédiaires 51, 52, 53, 54 et/ou 55 pour évaluer le niveau de lumière parasite sur les pixels voisins. Par pixels voisins, on entend ici des pixels situés dans un rectangle d'une dizaine à quelques dizaines de pixels de côté. On corrige les mesures dans les sous-images spectrales 41, 42, 43, 44, 45 et 46, en soustrayant à des pixels des voies correspondant au signal recherché, une valeur estimée de lumière parasite obtenue par exemple par une moyenne des valeurs d'un certain nombre de pixels adjacents des zones intermédiaires 51, 52, 53, 54 et 55 les plus proches, autrement dit dans un rectangle de une à quelques dizaines de pixels de côté, c'est à dire pour des longueurs d'ondes voisines.

Comme décrit ci-dessus, on obtient le vecteur de Stokes réduit à partir des mesures des six faisceaux lumineux polarisés ou des six sous-images spectrales 41, 42, 43, 44, 45 et 46 séparées spatialement et en polarisation sur le détecteur d'image. Cette mesure peut être acquise à la fréquence d'acquisition du système de détection, par exemple à 50 Hz ou 100 Hz. On souligne ici qu'aucune modulation temporelle de polarisation n'est requise.

Selon un premier exemple de réalisation, le bras d'illumination 50 comporte une lampe flash xénon 1 ayant une puissance de 5W, le premier système optique 2 comporte une lentille qui focalise une image de l'arc de la lampe flash xénon 1 sur un dispositif portant plusieurs diaphragmes source, un premier diaphragme source de dimension WI,s=540$\mu$m$\times$WI,p=250$\mu$m, et un deuxième diaphragme source de dimension WI,s=50$\mu$m$\times$WI,p=25$\mu$m. Le système optique de focalisation comporte une lentille 4 de longueur focale 50 mm, formant une image du diaphragme source avec un facteur de grossissement de 1 sur l'échantillon 6 placé à 100 mm de la lentille 4. Un polariseur 5 Rochon est placé à la sortie de cette lentille 4, son axe de polarisation étant orienté à 45 degrés du plan d'incidence 8. Le bras de réception 60 comporte une lentille segmentée 22, de longueur focale 100 mm. Cette lentille segmentée 22 est fabriquée à partir d'une lentille biconvexe de longueur focale 100 mm, en N-BK7, en découpant trois segments 221, 222, 223 de largeur E ≈ 1mm et de hauteur H ≈ 8mm, comme illustré en figure 4 puis en rassemblant les trois segments 221, 222, 223 par collage. Placée sur le trajet optique du faisceau secondaire 12 réfléchi à 100 mm de l'échantillon, la lentille segmentée 22 crée 3 faisceaux collimatés 13, 14, 15 séparés d'un angle d'environ 1,8 degrés. Le plan de séparation est un plan normal au plan d'incidence contenant l'axe optique 19 du faisceau secondaire 12. On place un masque 21 présentant trois ouvertures 211, 212, 213 devant la lentille segmentée 22, afin de bien séparer les 3 faisceaux collimatés 13, 14, 15, en évitant qu'une partie du faisceau secondaire incident sur la zone de jonction entre deux segments adjacents n'entre par un segment de lentille et ne sorte par un autre segment de lentille. On place juste après la lentille segmentée 22, une lame d'onde 251 devant un segment de lentille 221 et, respectivement, une autre lame d'onde 253 devant un autre segment de lentille 223, de façon à intercepter exactement les faisceaux collimatés 13, respectivement 15 traversant chacun un de ces deux segments de lentille 221, respectivement 223. La lame d'onde 251 est par exemple une lame demi-onde achromatique, ayant son axe orienté à environ 22,5 degrés du plan d'incidence. La lame d'onde 253 est par exemple est une lame quart d'onde achromatique, ayant son axe orienté dans le plan d'incidence. Un prisme de Wollaston 26, séparant un faisceau non polarisé d'un angle BETA de 0,9 degrés, en 2 faisceaux ayant des polarisations orientées à +45 et -45 degrés du plan de séparation, est placé sur le trajet de l'ensemble des 3 faisceaux collimatés 13, 14, 15, avec son plan de séparation perpendiculaire au plan d'incidence. Une lentille 27 de longueur focale 10 mm est placée en sortie du prisme de Wollaston 26 pour focaliser les six faisceaux séparés 131, ..., 136 sur la fente d'entrée 31 d'un spectromètre de type CP20 de la société HORIBA. La grande dimension de la fente d'entrée, 2mm, est disposée dans le plan de dispersion des 6 faisceaux séparés 131, ..., 136. La petite dimension de la fente d'entrée est de 25 μm. Le détecteur d'image 33 équipant le spectromètre CP-20 est un capteur monochrome SONY dont les pixels mesurent 5,86 μm de côté.

La figure 8 présente schématiquement l'image obtenue sur le capteur, ainsi que les différentes zones 41, ...46 définies plus haut et associées au traitement du signal. Les valeurs des intensités acquises sur chacune de ces zones 41, ...46 permettent d'en déduire les valeurs spectroscopiques de Psi et Delta de l'échantillon.

L'ellipsomètre ou scattéromètre spectroscopique de la présente divulgation permet d'adapter la durée d'acquisition d'une mesure en fonction des dimensions du diaphragme source 3 et des propriétés de l'échantillon à mesurer. En effet, un ellipsomètre en réflexion peut être utilisé sur des matériaux très réfléchissants comme de l'aluminium, ou bien sur des matériaux très peu réfléchissants comme du verre. Or, il est connu que le rapport signal sur bruit obtenu avec un capteur d'image matriciel est souvent meilleur lorsque le temps d'exposition est choisi de manière à ce que le signal maximum soit proche de la saturation, sans l'atteindre, de façon à exploiter au mieux la dynamique du capteur d'image 33. Le système selon la présente divulgation permet d'adapter la durée d'acquisition du capteur d'image 33 de façon à obtenir un signal maximum sur la bande de longueur d'onde d'intérêt, c'est à dire un signal proche de la saturation, sans atteindre cette saturation. Selon la présente divulgation, la durée d'acquisition du capteur d'image 33 peut sans inconvénient être adaptée dans une large gamme en fonction des conditions expérimentales, par exemple de 4 ms à 1 s avec une fréquence d'acquisition du hertz à plusieurs dizaines de hertz à plus de 100 Hz ou 200 Hz, chaque mesure spectroscopique s'étendant sur une gamme spectrale de plusieurs centaines de nanomètres et avec une résolution spectrale de quelques nanomètres.

Au contraire dans un ellipsomètre à modulation temporelle de polarisation, par exemple basé sur un composant optique tournant, la durée d'acquisition d'une mesure complète est fixée par la fréquence de modulation qui impose d'acquérir une série de mesures spectrales sur une période de modulation, par exemple une période de révolution du composant optique tournant.

Selon un autre aspect particulier, on dispose de plusieurs diaphragmes source 3 ayant des dimensions et/ou des formes différentes. Par exemple, on dispose d'au moins deux diaphragmes source 3 ayant un rapport de surface d'au moins 10 entre eux. Un commutateur permet de sélectionner le diaphragme source 3 ayant les dimensions adaptées en fonction de la mesure souhaitée. D'une part, on utilise un grand diaphragme source pour former un spot de grande taille, par exemple de 540 μm × 250 μm, pour acquérir rapidement des mesures sur un échantillon ne présentant pas de motifs ou d'hétérogénéité plus petites que la surface du spot. D'autre part, on utilise un petit diaphragme source pour former un spot de petite taille, par exemple de 50 μm × 25 μm, sur un échantillon présentant des petits motifs, ou bien pour acquérir une image ellipsométrique avec une bonne résolution spatiale. Dans ce cas, le flux lumineux maximal arrivant sur le capteur d'image est environ cent fois plus faible qu'avec le grand diaphragme source : il est alors intéressant d'augmenter la durée d'acquisition d'un facteur 100, afin d'utiliser au mieux la dynamique du capteur d'image en fonction des dimensions du spot utilisé pour sonder l'échantillon.

Un avantage important de l'ellipsomètre ou du scattéromètre selon la présente divulgation, est de permettre l'utilisation de sources lumineuses dont l'intensité n'est pas constante en fonction du temps. La source de lumière 1 peut être une lampe conventionnelle émettant flux lumineux instable en fonction du temps, fluctuant par exemple de plusieurs pourcent, ou une source pulsée, telle qu'une lampe flash ou un laser pulsé. En particulier, une source de type supercontinuum, aussi appelée laser blanc, est ici intéressante car elle délivre une lumière sur une large plage spectrale, typiquement de 390nm à 1,2 μm, avec une très grande brillance, à une fréquence de répétition élevée, par exemple de 20 kHz bien que ce type de source pulsée soit connue pour être très peu répétable, en intensité et/ou en forme du spectre, d'un pulse à l'autre. De façon avantageuse, lorsqu'on utilise une source pulsée, on synchronise la source pulsée et le système de détection, de façon à pouvoir maîtriser le nombre de pulses pendant lesquels on fait l'acquisition. L'ellipsomètre selon la présente divulgation peut être facilement et avantageusement utilisé avec une source peu stable en fonction du temps et/ou avec une source pulsée. Au contraire, un ellipsomètre conventionnel utilisant une modulation de la polarisation en fonction du temps, fonctionne très mal avec une source instable ou pulsée. En effet, dans ce cas, l'évolution du signal avec le temps ne peut pas être attribuée uniquement à la modulation de polarisation et le traitement du signal effectué est entaché d'erreurs.

Selon un aspect particulier, la source lumineuse puisée, par exemple une lampe flash Xénon ou une source supercontinuum, est combinée avec un ajustement de la durée d'acquisition de manière à ce que le nombre d'impulsions lumineuses N produise une image sur le capteur d'image 33 du spectromètre imageur 30 dont l'intensité est juste en dessous de la saturation sur la gamme de longueur d'onde d'intérêt. En d'autres termes, on ajuste la durée d'acquisition pour qu'avec N impulsions, il n'y ait pas de saturation de l'image et pour qu'avec N+1 impulsions, il y ait saturation de l'image.

Selon un autre aspect particulier, on observe que le signal maximal reçu par le capteur d'image varie de plusieurs décades en fonction de la longueur d'onde. Cette variation dépend des variations en fonction de la longueur d'onde de l'intensité de la source, des propriétés optiques de l'échantillon, de l'efficacité du réseau de diffraction et/ou de l'efficacité du détecteur. Lorsque la durée d'acquisition est déterminée comme indiqué ci-dessus de manière à éviter la saturation aux longueurs d'ondes où le signal est le plus intense, on peut observer des valeurs de signal qui sont inférieures de plusieurs ordres de grandeur à la valeur de saturation aux longueurs d'ondes où le signal est le moins intense. Pour les longueurs d'ondes de faible signal, il en résulte des sources d'erreur et d'incertitude, liées par exemple au bruit de quantification du capteur d'image. Une manière de remédier à ce défaut est de réaliser l'acquisition de deux images successives, correspondant à 2 valeurs différentes, N1 et N2, du nombre de pulses de la source lumineuse pulsée. On choisit N1 de façon à ce que le signal ne sature à aucune longueur d'onde d'intérêt. On choisit en suite N2 dans une gamme : $4N1 < N2 < 25N1$, par exemple $N2 = 10N1$. On traite ensuite séparément les deux images acquises respectivement avec N1 et N2 pulse, comme indiqué précédemment, afin d'obtenir les valeurs ellipsométriques de Psi et Delta. On retient les valeurs de Psi et Delta obtenues à partir de l'image à N2 pulses uniquement aux longueurs d'ondes pour lesquelles il n'y a aucune saturation de l'image à ces longueurs d'ondes. On complète les spectres de Psi et Delta aux autres longueurs d'ondes, par celles issues du traitement de l'image obtenue pour N1 pulses. Ainsi, on obtient en deux prises d'images les valeurs de Psi et Delta dans des conditions de signal nettement améliorées par la mise à profit d'une plus grande dynamique du capteur d'image.

Selon un exemple de réalisation, le bras d'illumination 50 comporte une source supercontinuum 1, délivrant en sortie d'une fibre optique monomode un faisceau lumineux source 10 dans une gamme spectrale s'étendant de 400 nm à plusieurs microns. Un ou plusieurs miroirs concaves focalisent le faisceau lumineux source 10 en un spot 66 sur l'échantillon 6. Le faisceau secondaire 12 réfléchi est capté par le bras d'illumination similaire à celui décrit dans le premier exemple ci-dessus. La source supercontinuum 1 émet un train de 10 impulsions pendant la durée d'acquisition du capteur d'image. Une première image 33a est lue par un ordinateur et on vérifie que le signal maximum du signal n'atteint pas la saturation du détecteur d'image 30 mais atteint ou dépasse 75% du niveau de saturation. Ensuite, la source supercontinuum 1 émet un train de 100 impulsions et une deuxième image 33b acquise durant ce train de 100 impulsions est lue sur l'ordinateur. La première image 33a et la deuxième image 33b sont traitées selon les étapes détaillées plus haut, afin d'obtenir le signal ellipsométrique sur toute la gamme spectrale. On retient comme valeurs ellipsométriques issues de la deuxième image 33b, présentant plus de signal, sauf aux longueurs d'ondes où on observe une saturation, et pour ces longueurs d'ondes on retient les valeurs ellipsométriques issues de la première image 33a.

Selon un autre aspect particulier, on extrait en outre un estimateur permettant de quantifier le niveau de bruit de mesure. Les mesures ellipsométriques sont souvent utilisées afin d'ajuster les paramètres de modèles de simulation numérique de matériaux et/ou de couches minces. La recherche des paramètres optimaux des modèles repose généralement sur la minimisation des écarts entre les angles ellipsométriques Psi et Delta mesurés et ceux issus du modèle. Il est pertinent de pondérer ces écarts par un paramètre qui reflète la précision des mesures expérimentales. Une source importante des incertitudes expérimentales est le bruit de grenaille (shot noise en anglais) du détecteur. Dans un ellipsomètre, le bruit sur les angles ellipsométriques Psi et Delta est de l'ordre de l'inverse de la racine carrée du nombre de photons mesurés dans la case spectrale considérée. On entend ici par case spectrale les pixels des six sous-images spectrales 41 à 46, affectés à une même longueur d'onde. Dans l'ellipsomètre selon la présente divulgation, le vecteur de Stokes fournit non seulement les valeurs de Psi, Delta et de dépolarisation mais le capteur d'image fournit en outre le nombre total de photons mesurés. Ce nombre total de photons se déduit facilement de la somme des valeurs des pixels aux longueurs d'ondes considérées, multipliée par le nombre de photon par digit, cette dernière quantité étant une caractéristique connue du capteur d'image 30. On peut par exemple calculer une quantité liée à cette dernière, telle que l'inverse de la racine carrée du nombre de photons détectés dans la case spectrale divisé par 2, qui fournit directement un estimateur du bruit de quantification des angles ellipsométriques Psi et Delta si ceux-ci sont exprimés en radians. D'autres quantités indicatives du rapport signal sur bruit peuvent être calculées à partir de la sommation des valeurs des pixels d'une sous-zone du capteur d'image 30.

On a déjà mentionné plus haut les avantages d'utiliser une source supercontinue qui présente une très grande brillance sur une large gamme spectrale, par exemple de 390 nm à 1,2 $\mu$m. Le rayonnement émis par une source supercontinue sort d'une fibre optique dont le diamètre de cœur est en général inférieur à 5 $\mu$m. Le faisceau lumineux incident peut être focalisé en un spot très petit sur l'échantillon : par exemple $W_{e,s}$=10$\mu$m et $W_{e,p}$=20$\mu$m. La surface de la source étant petite, ses 6 image dans le plan de la fente d'entrée 31 du spectromètre imageur sont aussi de petite taille et très séparées spatialement : par ex. $W_{f,s}$ et $W_{f,p}$ valant environ 5$\mu$m, les différentes taches étant séparées de 450 $\mu$m dans le sens de la longueur de la fente 31. Cette séparation spatiale des 6 images sur la fente d'entrée permet d'obtenir une très bonne résolution spectrale, puisque pour un spectromètre imageur comme pour un spectromètre classique, la résolution spectrale est d'autant meilleure que la largeur $W_{f,p}$ de la fente (réelle ou virtuelle) en entrée de spectromètre est faible. On observe alors sur le capteur d'image 33 du spectromètre imageur 30, six trainées correspondant à l'étalement spectral de chaque polarisation, dont la largeur Wi,s est très faible comparée à l'écartement entre deux zones adjacentes par exemple 41 et 42 (voir figure 8). Selon une variante, en combinaison avec une source de faible étendue comme une source supercontinue, on ajoute une lentille cylindrique, convergente ou divergente, dans le bras de détection 60 entre l'échantillon 6 et la fente d'entrée 31 du spectromètre imageur, et de préférence dans l'espace où les faisceaux sont collimatés. La lentille cylindrique est orientée de manière à disperser spatialement les 6 images dans la direction de la fente d'entrée 31 tout en évitant que les 6 images se superposent. Ainsi, on étale l'intensité issue de la source supercontinue sur un nombre plus important de pixels du capteur d'image 33, sans altérer la résolution spectrale. Cette variante permet de capter une quantité plus importante de lumière lors de chaque acquisition par le capteur d'image sans atteindre la saturation du capteur d'image.

Selon un autre aspect particulier, l'ellipsomètre ou scattéromètre comporte en outre une table de déplacement du porte-échantillon. La table de déplacement comporte généralement deux axes de translation transverses à la normale à l'échantillon. Une telle table de déplacement permet l'acquisition de spectres ellipsométriques en différents points de l'échantillon. On obtient ainsi une cartographie d'un échantillon, par exemple de type plaque semiconducteur. Dans un ellipsomètre à modulation de polarisation, il est indispensable de stopper le déplacement pour acquérir une mesure complète, car la durée d'une mesure est d'au moins une demi-période de modulation. Toutefois, l'acquisition point-par-point est chronophage du fait des mouvements et arrêts répétés de la table de déplacement. Il est souhaitable d'obtenir plus rapidement une cartographie d'un échantillon. Un ellipsomètre ou scattéromètre instantané selon la présente divulgation permet de combiner l'utilisation d'une source de lumière pulsée à impulsions brèves avec une table de déplacement opérant un déplacement continu. On entend ici par impulsion brève une impulsion suffisamment brève pour que le déplacement soit négligeable pendant la durée de l'impulsion. De cette manière, il n'est pas nécessaire de stopper le déplacement du porte échantillon à chaque mesure, puisqu'on acquiert une mesure ellipsométrique instantanée durant une seule impulsion (ou quelques impulsions). Ce mode d'acquisition permet d'acquérir une série de mesures à la volée, à chaque impulsion source, sans avoir à stopper la table de déplacement pour effectuer une mesure ponctuellement. La fréquence d'acquisition des mesures est déterminée par la fréquence de répétition de la source et/ou la fréquence de lecture du détecteur d'image 33 du spectromètre imageur 30 qu'il convient de synchroniser. Avec une caméra CMOS, on peut atteindre une fréquence de lecture de 50 Hz ou même supérieure à 100 Hz. Une lampe flash xénon permet de délivrer une quantité de lumière importante, sur des impulsions de quelques nanosecondes, à une fréquence du même ordre de grandeur ou supérieure. Une source supercontinue a une fréquence de répétition qui peut atteindre 20 kHz. De cette manière, un ellipsomètre spectroscopique selon la présente divulgation permet d'effectuer une cartographie comportant des centaines de points en quelques secondes. Au contraire, les ellipsomètres conventionnels reposant sur une modulation temporelle de la polarisation, nécessitent que l'acquisition soit réalisée la table de déplacement étant à l'arrêt durant au moins une période de modulation. Or la fréquence de modulation d'un composant optique tournant est généralement de l'ordre de quelque Hz à environ 20 Hz au maximum, ce qui est beaucoup plus lent que la fréquence maximale d'acquisition d'un ellipsomètre selon la présente divulgation fonctionnant avec une source pulsée à impulsions brèves. De plus, la nécessité d'arrêter la table puis de la remettre en mouvement, limite la fréquence de déplacement à quelques Hz. Il s'ensuit qu'un ellipsomètre à modulation temporelle de polarisation ne permet de réaliser une cartographie qu'avec une cadence maximum de l'ordre de la dizaine de Hz, soit au moins un ordre de grandeur en dessous de la cadence maximale d'un ellipsomètre selon la présente divulgation fonctionnant avec une source pulsée à impulsions brèves en combinaison avec un mouvement continu de la table de déplacement.

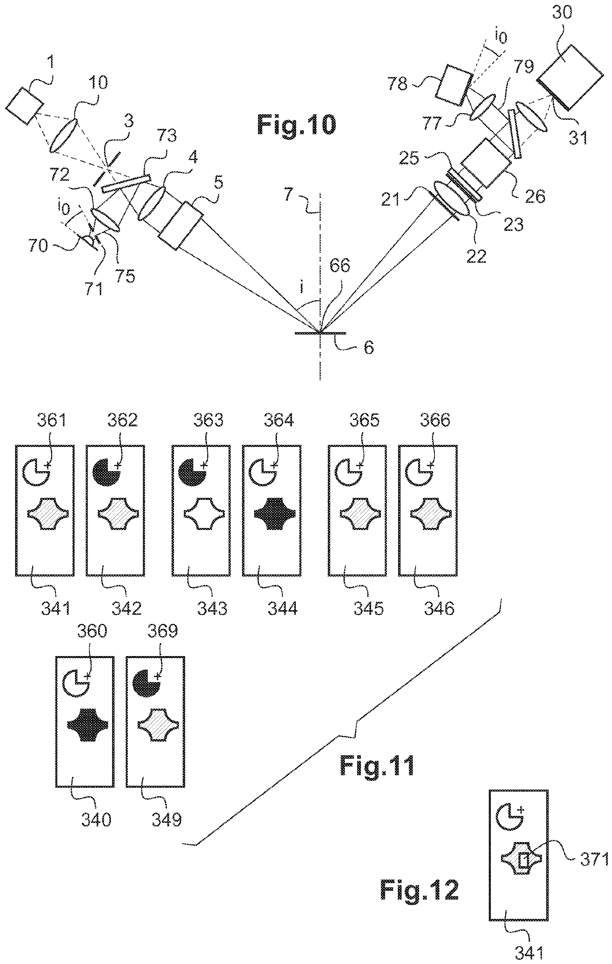

Selon une variante, illustrée en figure 10, l'ellipsomètre ou scattéromètre comporte en outre un système d'imagerie auxiliaire. Le système d'imagerie auxiliaire comporte une source de lumière auxiliaire 70 émettant un faisceau lumineux 75 à faible largeur spectrale, par exemple de type LED, associée à un masque 71 d'imagerie auxiliaire dont l'image est projetée sur l'échantillon 6, sur une surface de l'ordre de 1,5mmx4mm, et une caméra auxiliaire 78 munie d'un objectif 77, disposée sur le chemin optique après le dispositif optique séparateur de polarisation 26. Comme illustré sur la figure 10, un composant optique réfléchissant 73, disposé entre le diaphragme source 3 et le système optique 4 de focalisation permet d'injecter le faisceau lumineux 75 auxiliaire sur l'axe optique incident 9 vers l'échantillon. Un autre composant optique réfléchissant 76 permet de réfléchir le faisceau lumineux auxiliaire réfléchi 79 sur l'axe optique secondaire 19 vers la caméra auxiliaire 78. La caméra auxiliaire 78 est optiquement conjuguée avec les 6 images issues du masque 71 d'imagerie auxiliaire, 6 images ne se recouvrant pas ou au plus partiellement. Le champ que l'on peut imager sur l'échantillon peut s'étendre de quelques mm$^2$ à quelques dizaines de mm$^2$.

Du fait des lentilles segmentées et du prisme Wollaston décrits plus haut, la caméra auxiliaire 78 reçoit 6 images 341, ..., 346 de la zone illuminée par l'illuminateur auxiliaire, comme illustré par exemple sur la figure 11. Lorsque la zone illuminée sur l'échantillon comporte des motifs qui ont des propriétés ellipsométriques différentes à la longueur d'onde de la source de lumière auxiliaire 70, les réponses optiques de ces motifs apparaissent différemment sur chacune de ces 6 images, du fait que ces 6 images correspondent à des polarisations différentes. Pour en extraire une image des paramètres ellipsométriques Psi et Delta, il suffit, pour chaque ensemble de points 361, 362, 363, 364, 365, 366 ayant les mêmes coordonnées dans chaque image, de traiter l'intensité reçue comme indiqué p14, ligne 20 et suivantes, afin de déterminer en ce même point la valeur de psi, et la valeur de delta. On obtient ainsi deux images, l'image 340 représentant PSI, l'autre image 349 représentant DELTA à la longueur d'onde de la source de lumière auxiliaire 70 sur la zone éclairée de l'échantillon 6. On a ainsi démontré un procédé pour faire de l'imagerie ellipsométrique à une longueur d'onde. En utilisant une source auxiliaire de type diode RGB, on peut acquérir successivement une image ellipsométrique de l'échantillon à 3 longueurs d'ondes différentes.

Une autre utilisation système d'imagerie auxiliaire est destinée à la visualisation de la position du spot de l'ellipsomètre spectroscopique sur l'échantillon. Contrairement à l'exemple ci-dessus pour lequel on avait éteint ou bloqué le faisceau lumineux incident polarisé 11 provenant de la source de lumière 1 principale, dans cette utilisation, la caméra auxiliaire 78 reçoit simultanément l'image de la source de lumière 1 principale et de la source de lumière auxiliaire 70. L'intensité beaucoup plus grande du spot de l'ellipsomètre principal 371 permet d'identifier sa position sans ambiguïté. Ainsi, la figure 12 illustre un exemple permettant de visualiser à la fois le spot du faisceau ellipsométrique 371 superposé à la l'image 341 d'une zone plus grande de l'échantillon 6. Cette image 341 d'une zone plus grande de l'échantillon peut être l'une des 6 images 341, ..., 346, ou aussi l'image 340 en PSI et/ou l'image en 349 en DELTA.

Si l'intérêt d'une visualisation d'une partie de l'échantillon et de la position du spot sur l'échantillon sur un ellipsomètre était déjà connu, tout comme son implémentation sur une ellipsomètre à modulation, son implémentation dans un ellipsomètre instantané ne l'était pas, ni la manière de l'obtenir.

Selon un aspect particulier de cette variante, le plan du capteur de la caméra auxiliaire est incliné de façon à remplir les conditions de Scheimpflug. Plus précisément, l'angle d'inclinaison i3 du plan du capteur de la caméra auxiliaire par rapport à l'axe optique est lié à l'angle d'incidence *i* sur l'échantillon, à la longueur focale F1 de la lentille segmentée 22, et à la longueur focale F3 de l'objectif 77 de la caméra auxiliaire 78, par la relation :

$$tg(i_3) = \frac{F_3}{F_1} tg(i)$$

Le masque 71 d'imagerie auxiliaire est aussi incliné, sa normale faisant avec le faisceau incident un angle $i_0$ exprimé en fonction des paramètres précédents, et du rapport de grandissement G du système optique d'illumination 4, par la relation :

$$tg(i_0) = \frac{1}{G} tg(i)$$

De façon particulièrement avantageuse, le traitement permettant d'obtenir Psi et Delta pour chacune des voies spectro-polarimétrique est appliqué à la longueur d'onde de l'éclairage auxiliaire, en chaque point de l'échantillon présent dans les 6 images 341...346 formées simultanément sur la caméra auxiliaire 78, afin d'obtenir une carte des Psi, Delta de l'échantillon observé sans déplacement.

Dans un exemple de réalisation, on ajoute à l'ellipsomètre décrit dans le premier exemple, une source lumineuse auxiliaire 70, comprenant une diode émettant un faisceau lumineux à 640 nm, sur une largeur spectrale d'environ 10 nm. On suppose par ailleurs que cet ellipsomètre fonctionne avec un angle d'incidence de i=70° Le faisceau lumineux auxiliaire émis par cette diode est imagé sur un masque d'imagerie auxiliaire 71 de dimension Wa,s=0,75 et de dimension Wa,p= 2mm, lui-même réimagé sur l'échantillon 6 par une optique de grossissement 2. La normale à ce masque d'imagerie auxiliaire 71 est inclinée d'un angle $i_0$ de 53 degrés par rapport à l'axe optique du faisceau lumineux auxiliaire 75. Une lame semi-réfléchissante 73 permet de combiner les faisceaux issus des deux sources 1 et 70, les deux sources étant à une distance de 100mm de la lentille de focalisation 4 du bras d'illumination 50.

Le bras de détection 60 est similaire à celui de l'exemple 1, et comporte en outre une lame séparatrice 76 placée après le prisme de Wollaston 26. L'objectif 77 de la caméra auxiliaire 78 de focale F3=35mm focalise le faisceau prélevé sur le capteur de la caméra auxiliaire 78. De façon avantageuse, comme détaillé ci-dessus, la normale au plan du capteur de la caméra auxiliaire 78 forme un angle $i_3$ avec l'axe optique de 43 degrés selon les conditions de Scheimpflug.

## Revendications

1. Ellipsomètre (100) comprenant :

   - une source de lumière (1) adaptée pour générer un faisceau lumineux source (10);
   - un polariseur (5) adapté pour recevoir le faisceau lumineux source (10) et former un faisceau lumineux incident polarisé (11) ;
   - un système optique d'illumination (2, 4) adapté pour diriger le faisceau lumineux incident polarisé (11) vers un échantillon (6) suivant un axe optique incident (9) dans un plan d'incidence (8),
   - un séparateur optique de faisceau à division de front d'onde (20) disposé pour recevoir un faisceau lumineux secondaire (12) formé par réflexion ou transmission du faisceau lumineux incident polarisé (11) sur l'échantillon à un angle d'incidence déterminé, le faisceau lumineux secondaire (12) se propageant suivant un axe optique secondaire (19) dans le plan d'incidence (8), le séparateur optique de faisceau à division de front d'onde (20) étant orienté pour former trois faisceaux divisés (13, 14, 15) collimatés se propageant suivant trois axes optiques distincts (16, 17, 18) séparés angulairement dans un plan transverse au plan d'incidence (8) et
   - un dispositif optique de modification de polarisation (25) adapté pour recevoir les trois faisceaux divisés (13, 14, 15) collimatés et former trois faisceaux polarisés suivant trois états de polarisation distincts ;
   - un dispositif optique séparateur de polarisation (26) disposé et orienté pour recevoir les trois faisceaux polarisés suivant trois états de polarisation distincts et pour former six faisceaux séparés (131, 132, 133, 134, 135, 136) se propageant suivant six axes optiques séparés angulairement dans le plan transverse au plan d'incidence ;
   - un système de détection adapté pour détecter les six faisceaux séparés (131, 132, 133, 134, 135, 136) et un système de traitement adapté pour en déduire une mesure d'ellipsométrie.

2. Ellipsomètre selon la revendication 1 dans lequel le système de détection comprend au moins un spectromètre adapté pour détecter les six faisceaux séparés (131, 132, 133, 134, 135, 136).

3. Ellipsomètre selon la revendication 2 comprenant :

   - un système optique de focalisation (27) disposé pour recevoir les six faisceaux séparés (131, 132, 133, 134, 135, 136) et former six images (141, 142, 143, 144, 145, 146) alignées et séparées spatialement ;
   - et dans lequel ledit au moins un spectromètre comprend un spectromètre imageur (30) comprenant une fente d'entrée (31) allongée suivant une direction et disposée pour recevoir simultanément les six images (141, 142, 143, 144, 145, 146), le spectromètre imageur (30) étant adapté pour disperser spectralement les six images (141, 142, 143, 144, 145, 146) et former simultanément six sous-images spectrales (41, 42, 43, 44, 45, 46) séparés spatialement sur un détecteur d'image (33) ;
   - le détecteur d'image (33) étant adapté pour acquérir une image des six sous-images spectrales (41, 42, 43, 44, 45, 46) et
   - le système de traitement étant adapté pour traiter l'image des six sous-images spectrales et pour en déduire une mesure spectroscopique d'ellipsométrie.

4. Ellipsomètre selon l'une des revendications 1 à 3, dans lequel le système optique d'illumination (2, 4) est adapté pour focaliser le faisceau lumineux incident polarisé (11) sur l'échantillon (6) et dans lequel le séparateur optique de faisceau à division de front d'onde comporte une lentille segmentée (22) comportant trois segments de lentilles (221, 222, 223) ayant une même longueur focale et des axes optiques (225, 226, 227) parallèles entre eux et séparés spatialement, chaque segment de lentille (221, 222, 223) ayant un point focal objet (Fa, Fb, Fc), les trois segments de lentilles (221, 222, 223) étant assemblés de façon à ce que lesdits trois points focaux objet (Fa, Fb, Fc) soient alignés sur l'échantillon (6) transversalement au plan d'incidence, chaque segment de lentille (221, 222, 223) étant disposé pour recevoir une partie distincte du faisceau secondaire (12) et former un faisceau divisé (13, 14, 15) collimaté, les trois segments de lentilles (221, 222, 223) étant assemblés de façon à ce que lesdits trois faisceaux divisés (13, 14, 15) se propagent suivant les trois axes optiques distincts.

5. Ellipsomètre (100) selon l'une des revendications 1 à 4, dans lequel le système optique d'illumination (2, 4) est adapté pour collimater le faisceau lumineux incident polarisé (11) sur l'échantillon (6) et dans lequel le séparateur optique de faisceau à division de front d'onde comporte au moins deux prismes (231, 232, 233) ayant leurs arêtes disposées parallèlement au plan d'incidence (8), chaque prisme (231, 232, 233) étant disposé pour recevoir une partie distincte du faisceau secondaire (12) et former un faisceau divisé (13, 14, 15) collimaté se propageant suivant un axe optique dévié angulairement par rapport à l'axe optique secondaire (19), les au moins deux prismes (231, 232) étant orientés et assemblés de façon à ce que lesdits trois faisceaux divisés (13, 14, 15) collimatés se propagent suivant les trois axes optiques distincts.

6. Ellipsomètre (100) selon l'une des revendications 1 à 5, dans lequel le dispositif optique de modification de polarisation (25) comporte au moins deux lames d'onde, chaque lame d'onde ayant une retardance distincte, une lame d'onde étant disposée sur l'un des trois faisceaux divisés (13, 14, 15) et une autre lame d'onde étant disposée sur un autre des trois faisceaux divisés (13, 14, 15).

7. Ellipsomètre (100) selon l'une des revendications 1 à 6, dans lequel le dispositif optique séparateur de polarisation (26) comporte un prisme de Wollaston, un prisme de Rochon, un prisme de Sénarmont ou une lame d'onde diffractive.

8. Ellipsomètre (100) selon l'une des revendications 1 à 7, dans lequel la source de lumière (1) comporte une lampe halogène, une lampe flash xénon, une source laser supercontinuum et/ou un laser à fibre optique et/ou une source à impulsions.

9. Ellipsomètre (100) selon la revendication 3 et la revendication 8 dans lequel la source de lumière (1) est une source laser supercontinuum et comportant en outre une lentille cylindrique disposée sur le trajet optique du faisceau secondaire en amont de la fente d'entrée (31) du spectromètre imageur (30), la lentille cylindrique étant adaptée et orientée pour élargir les six images transversalement à la direction allongée de la fente d'entrée (31).

10. Ellipsomètre (100) selon l'une des revendications 1 à 9 comportant un premier diaphragme source (3), le système optique d'illumination (2, 4) étant adapté pour former une première image du premier diaphragme source (3) sur l'échantillon (6) et/ou comportant un deuxième diaphragme source, le système optique d'illumination (2, 4) étant adapté pour former une deuxième image du deuxième diaphragme source sur l'échantillon (6), le rapport de surface entre le premier diaphragme source (3) et le deuxième diaphragme source étant supérieur ou égal à 10.

11. Ellipsomètre (100) selon la revendication 3 dans lequel la source de lumière (1) est adaptée pour générer une première série de N1 impulsions lumineuses, où N1 est un nombre entier naturel, le détecteur d'image (33) étant adapté pour acquérir une première image des six sous-images spectrales de la première série de N1 impulsions lumineuses sans saturation du détecteur d'image (33), la source de lumière (1) étant adaptée pour générer une deuxième série de N2 impulsions lumineuses, où N2 est un nombre entier naturel, N2 étant compris entre N1+1 et 25.N1, le détecteur d'image (33) étant adapté pour acquérir une deuxième image de la deuxième série de N2 impulsions lumineuses avec saturation du détecteur d'image (33) sur une première partie des six sous-images spectrales et sans saturation du détecteur d'image (33) sur une deuxième partie des six sous-images spectrales, et dans lequel système de traitement est adapté pour combiner la première partie des six sous-images spectrales de la première image avec la deuxième partie des six sous-images spectrales de la deuxième image pour en déduire la mesure spectroscopique d'ellipsométrie.

12. Ellipsomètre (100) selon la revendication 3 ou 11 dans lequel au moins deux sous-images spectrales (41, 42, 43, 44, 45 et 46) sont séparées spatialement l'une de l'autre par une zone intermédiaire (51, 52, 53, 54, 55) et dans lequel le système de traitement d'image est adapté pour mesurer une intensité lumineuse parasite dans la zone intermédiaire (51, 52, 53, 54, 55) et pour soustraire ladite intensité lumineuse parasite d'au moins une partie de l'image des six sous-images spectrales.

13. Procédé de mesure d'ellipsométrie comprenant les étapes suivantes :

    - générer un faisceau lumineux incident polarisé (11) ;
    - diriger le faisceau lumineux incident polarisé (11) vers un échantillon (6) suivant un axe optique incident (9) dans un plan d'incidence (8) ;
    - recevoir un faisceau secondaire (12) formé par réflexion ou transmission du faisceau lumineux incident polarisé (11) sur l'échantillon (6) à un angle d'incidence déterminé, le faisceau secondaire (12) se propageant suivant un axe optique secondaire (19) dans le plan d'incidence (8),
    - séparer optiquement le faisceau secondaire par division de front d'onde de façon à former trois faisceaux divisés (13, 14, 15) collimatés se propageant suivant trois axes optiques distincts, les trois axes optiques distincts étant séparés angulairement dans un plan transverse au plan d'incidence,

- modifier la polarisation d'au moins deux des trois faisceaux divisés (13, 14, 15) collimatés de façon à former trois faisceaux polarisés suivant trois états de polarisation distincts ;

- séparer en polarisation les trois faisceaux polarisés de façon à former six faisceaux séparés (131, 132, 133, 134, 135, 136) se propageant suivant six axes optiques séparés angulairement dans un plan transverse au plan d'incidence (8) ;

- détecter les six faisceaux séparés (131, 132, 133, 134, 135, 136) pour en déduire une mesure d'ellipsométrie.

14. Scattéromètre (100) comprenant :

- une source de lumière (1) adaptée pour générer un faisceau lumineux source (10);

- un polariseur (5) adapté pour recevoir le faisceau lumineux source (10) et former un faisceau lumineux incident polarisé (11) ;

- un système optique d'illumination (2, 4) adapté pour diriger le faisceau lumineux incident polarisé (11) vers un échantillon (6) suivant un axe optique incident (9) dans un plan d'incidence (8),

- un séparateur optique de faisceau à division de front d'onde (20) disposé pour recevoir un faisceau lumineux secondaire (12) formé par diffraction du faisceau lumineux incident polarisé (11) sur l'échantillon à un angle d'incidence déterminé, le faisceau lumineux secondaire (12) se propageant suivant un axe optique secondaire (19) dans le plan d'incidence (8), le séparateur optique de faisceau à division de front d'onde (20) étant orienté pour former trois faisceaux divisés (13, 14, 15) collimatés se propageant suivant trois axes optiques distincts (16, 17, 18) séparés angulairement dans un plan transverse au plan d'incidence (8) et

- un dispositif optique de modification de polarisation (25) adapté pour recevoir les trois faisceaux divisés (13, 14, 15) collimatés et former trois faisceaux polarisés suivant trois états de polarisation distincts ;

- un dispositif optique séparateur de polarisation (26) disposé et orienté pour recevoir les trois faisceaux polarisés suivant trois états de polarisation distincts et pour former six faisceaux séparés (131, 132, 133, 134, 135, 136) se propageant suivant six axes optiques séparés angulairement dans le plan transverse au plan d'incidence ; et

- un système de détection adapté pour détecter les six faisceaux séparés (131, 132, 133, 134, 135, 136) et un système de traitement pour en extraire une mesure de scattérométrie.

15. Scattéromètre (100) selon la revendication 14 comprenant :

- un système optique de focalisation (27) disposé pour recevoir les six faisceaux séparés (131, 132, 133, 134, 135, 136) et former six images (141, 142, 143, 144, 145, 146) alignées et séparées spatialement ;

- un spectromètre imageur (30) comprenant une fente d'entrée (31) allongée suivant une direction et disposée pour recevoir simultanément les six images (141, 142, 143, 144, 145, 146), le spectromètre imageur (30) étant adapté pour disperser spectralement les six images (141, 142, 143, 144, 145, 146) et former simultanément six sous-images spectrales (41, 42, 43, 44, 45, 46) séparés spatialement sur un détecteur d'image (33) ;

- le détecteur d'image (33) étant adapté pour acquérir une image des six sous-images spectrales (41, 42, 43, 44, 45, 46) et

- le système de traitement étant adapté pour traiter l'image des six sous-images spectrales et pour en déduire une mesure spectroscopique de scattérométrie

**Patentansprüche**

1. Ellipsometer (100) mit

- einer Lichtquelle (1), die dazu ausgelegt ist, einen Quellenlichtstrahl (10) zu erzeugen,

- einem Polarisator (5), der dazu ausgelegt ist, den Quellenlichtstrahl (10) zu empfangen und einen polarisierten einfallenden Lichtstrahl (11) zu erzeugen,

- einem optischen Beleuchtungssystem (2, 4), das dazu ausgelegt ist, den polarisierten einfallenden Lichtstrahl (11) entlang einer optischen Einfallsachse (9) in einer Einfallsebene (8) auf eine Probe (6) zu richten,

- einem optischen Strahlenteiler mit Frontwellenteilung (20), der zum Empfangen eines Sekundärlichtstrahls (12) angeordnet ist, der durch Reflexion oder Übertragung des polarisierten Einfallslichtstrahls (11) auf der Probe unter einem bestimmten Einfallswinkel gebildet worden ist, wobei sich der Sekundärlichtstrahl (12) entlang einer sekundären optischen Achse (19) in der Einfallsebene (8) ausbreitet, wobei der optische Strahlenteiler mit Frontwellenteilung (20) so orientiert ist, daß er drei gebündelte geteilte Strahlen (13, 14, 15) bildet, die sich entlang dreier verschiedener optischer Achsen (16, 17, 18), die in einer Ebene quer zur Einfallsebene (8) winkelmäßig getrennt sind, ausbreiten, und
- einer optischen Vorrichtung (25) zur Änderung der Polarisation, die zum Empfangen der drei gebündelten geteilten Strahlen (13, 14, 15) und zum Bilden von drei in drei verschiedenen Polarisationszuständen polarisierten Strahlen ausgelegt ist,
- einem optischen Polarisationstrenner (26), der zum Empfangen der drei in drei verschiedenen Polarisationszuständen polarisierten Strahlen und zum Bilden von sechs getrennten Strahlen (131, 132, 133, 134, 135, 136), die sich entlang sechs winkelmäßig getrennter optischer Achsen in einer zur Einfallsebene transversalen Ebene ausbreiten, angeordnet und ausgerichtet ist,
- einem Erfassungssystem, das zum Erlassen der sechs getrennten Strahlen (131, 132, 133, 134, 135, 136) ausgelegt ist, und einem Verarbeitungssystem, das dazu ausgelegt ist, daraus ein ellipsometrisches Maß abzuleiten.

2. Ellipsometer gemäß Anspruch 1, bei dem das Erfassungssystem wenigstens ein Spektrometer aufweist, das dazu ausgelegt ist, die sechs getrennten Strahlen (131, 132, 133, 134, 135, 136) zu erfassen.

3. Ellipsometer gemäß Anspruch 2, mit:

> - einem optischen Fokussierungssystem (27), das so angeordnet ist. daß es die sechs getrennten Strahlen (131, 132, 133, 134, 135, 136) empfängt und sechs ausgerichtete und räumlich getrennte Bilder (141, 142, 143, 144, 145, 146) erzeugt,
> - und bei dem das wenigstens eine Spektrometer ein Abbildungsspektrometer (30) aufweist, das einen Eingangsspalt (31) aufweist, der sich in einer Richtung erstreckt und dazu angeordnet ist, die sechs Bilder (141, 142, 143, 144, 145, 146) gleichzeitig zu empfangen, wobei das Abbildungsspektrometer (30) dazu ausgelegt ist, die sechs Bilder (141, 142, 143, 144, 145, 146) spektral zu streuen und gleichzeitig auf einem Bildsensor (33) sechs räumlich getrennte spektrale Unterbilder (41, 42, 43, 44, 45, 46) zu bilden,
> - wobei der Bildsensor (33) dazu ausgelegt ist, ein Bild der sechs spektralen Unterbilder (41, 42, 43, 44, 45, 46) aufzunehmen, und
> - das Verarbeitungssystem dazu ausgelegt ist, das Bild der sechs spektralen Unterbilder zu verarbeiten und daraus ein spektroskopisches ellipsometrisches Maß abzuleiten.

4. Ellipsometer gemäß einem der Ansprüche 1 bis 3, bei dem das optische Beleuchtungssystem (2, 4) dazu ausgelegt ist, den polarisierten einfallenden Lichtstrahl (11) auf die Probe (6) zu fokussieren, und bei dem der optische Strahlenteiler mit Frontwellenteilung eine unterteilte Linse (22) mit drei Linsenabschnitten (221. 222, 223) aufweist, die eine gleiche Brennweite und zueinander parallele und räumlich getrennte optische Achsen (225, 226, 227) aufweisen, wobei jeder Linsenabschnitt (221, 222, 223) einen objektseitigen Brennpunkt (Fa, Fb, Fc) aufweist, wobei die drei Linsenabschnitte (221, 222, 223) so zusammengesetzt sind, daß die drei objektseitigen Brennpunkte (Fa, Fb, Fc) quer zur Einfallsebene auf die Probe (6) ausgerichtet sind, wobei jeder Linsenabschnitt (221, 222, 223) so angeordnet ist, daß er einen bestimmten Teil des Sekundärlichtstrahls (12) empfängt und einen gebündelten geteilten Strahl (13. 14, 15) bildet, wobei die drei Linsenabschnitte (221, 222, 223) so zusammengesetzt sind, daß sich die drei geteilten Strahlen (13, 14, 15) entlang den drei getrennten optischen Achsen ausbreiten.

5. Ellipsometer (100) gemäß einem der Ansprüche 1 bis 4, bei dem das optische Beleuchtungssystem (2, 4) dazu ausgelegt ist, den einfallenden polarisierten Lichtstrahl (11) auf der Probe (6) zu bündeln, und bei dem der optische Strahlenteiler mit Frontwellentellung wenigstens zwei Prismen (231, 232, 233) aufweist, deren Kanten parallel zur Einfallsebene (8) angeordnet sind, wobei jedes Prisma (231, 232, 233) so angeordnet ist, daß es einen bestimmten Teil des Sekundärstrahis (12) empfängt und einen gebündelten geteilten Strahl (13, 14, 15) bildet, der sich entlang einer gegenüber der optischen Sekundärachse (19) winkelmäßig umgelenkten optischen Achse ausbreitet, wobei die wenigstens zwei Prismen (231, 232) so ausgerichtet und zusammengesetzt sind, daß sich die drei gebündelten geteilten Strahlen (13, 14, 15) entlang der drei verschiedenen optischen Achsen ausbreiten.

6. Ellipsometer (100) gemäß einem der Ansprüche 1 bis 5, bei dem die optische Vorrichtung (25) zur Änderung der Polarisation wenigstens zwei Wellenplättchen aufweist, wobei jedes Wellenplättchen eine bestimmte Verzögerung aufweist, wobei ein Wellenplättchen auf einem der drei geteilten Strahlen (13, 14, 15) angeordnet ist und ein anderes Wellenplättchen auf einem anderen der drei geteilten Strahlen (13, 14, 15) angeordnet ist.

7. Ellipsometer (100) gemäß einem der Ansprüche 1 bis 6, bei dem der optische Polarisationstrenner (26) ein Wollastonprisma, ein Rochonprisma, ein Senarmontprisma oder ein beugendes Wellenplättchen aufweist.

8. Ellipsometer (100) gemäß einem der Ansprüche 1 bis 7. bei dem die Lichtquelle (1) eine Halogenlampe, eine Xenonblitzlampe, eine Superkontinuum-Laserquelle und/oder einen Glasfaserlaser und/oder eine Impulsquelle aufweist.

9. Ellipsometer (100) gemäß Anspruch 3 und Anspruch 8, bei dem die Lichtquelle (1) eine Superkontinuum-Laserquelle ist und außerdem auf dem optischen Weg des Sekundärstrahls vor dem Eingangsschlitz (31) des Abbitdungsspektrometers (30) eine zylindrische Linse aufweist, wobei die zylindrische Linse dazu ausgelegt und ausgerichtet ist, die sechs Bilder quer zur Längsrichtung des Eingangsschlitzes (31) zu verbreitern.

10. Eilipsometer (100) gemäß einem der Ansprüche 1 bis 9, mit einer ersten Quellenblende (3), wobei das optische Beleuchtungssystem (2, 4) dazu ausgelegt ist, ein erstes Bild der ersten Quellenblende (3) auf der Probe (6) zu bilden. und/oder eine zweite Quellenblende aufweist, wobei das optische Beleuchtungssystem (2, 4) dazu ausgelegt ist, ein zweites Bild der zweiten Quellenblende auf der Probe (6) zu bilden, wobei das Oberflächenverhältnis zwischen der ersten Quellenblende (3) und der zweiten Quellenblende größer als oder gleich 10 ist.

11. Eilipsometer (100) gemäß Anspruch 3, bei dem die Lichtquelle (1) dazu ausgelegt ist, eine erste Serie von N1 Lichtimpulsen zu erzeugen, wobei N1 eine natürliche ganze Zahl ist, wobei der Bildsensor (33) dazu ausgelegt ist, ein erstes Bild der sechs spektralen Unterbilder der ersten Serie von N1 Lichtimpulsen ohne Sättigung des Bildsensors (33) aufzunehmen, wobei die Lichtquelle (1) dazu ausgelegt ist, eine zweite Serie von N2 Lichtimpulsen zu erzeugen, wobei N2 eine natürliche ganze Zahl ist, wobei N2 zwischen N1+1 und 25·N1 liegt, wobei der Bildsensor (33) dazu ausgelegt ist, ein zweites Bild der zweiten Serie von N2 Lichtimpulsen mit Sättigung des Bildsensors (33) in einem ersten Teil der sechs spektralen Unterbilder und ohne Sättigung des Bildsensors (33) in einem zweiten Teil der sechs spektralen Unterbilder aufzunehmen, und bei dem das Verarbeitungssystem dazu ausgelegt ist, den ersten Teil der sechs spektralen Unterbilder des ersten Bilds mit dem zweiten Teil der sechs spektralen Unterbilder des zweiten Bilds zu kombinieren, um daraus das spektroskopische ellipsometrische Maß abzuleiten.

12. Ellipsometer (100) gemäß Anspruch 3 oder 11, bei dem wenigstens zwei spektrale Unterbilder (41, 42, 43, 44, 5, 46) durch eine Zwischenzone (51, 52, 53, 54, 55) räumlich voneinander getrennt sind und bei dem das Bildverarbeitungssystem dazu ausgelegt ist, in der Zwischenzone (51, 52, 53. 54. 55) eine Störleuchtstärke zu messen und die Störlichtstärke von wenigstens einem Teil des Bildes der sechs spektralen Unterbilder abzuziehen.

13. Ellipsometrisches Meßverfahren mit folgenden Schritten:

- Erzeugen eines polarisierten einfallenden Lichtstrahls (11),
- Richten des polarisierten einfallenden Lichtstrahls (11) auf eine Probe (6) entlang einer optischen Einfallsachse (9) in einer Einfallsebene (8),
- Empfangen eines durch Reflexion oder Übertragung des polarisierten einfallenden Lichtstrahls auf der Probe (6) unter einem bestimmten Einfallswinkel gebildeten Sekundärstrahls (12), wobei sich der Sekundärstrahl (12) entlang einer optischen Sekundärachse (19) in der Einfallsebene (8) ausbreitet,
- optisches Trennen des Sekundärstrahls durch Wellenfrontteilung, um drei gebündelte geteilte Strahlen (13, 14, 15) zu bilden, die sich entlang verschiedener optischer Achsen ausbreiten, wobei die drei verschiedenen optischen Achsen winkelmäßig in einer zur Einfallsebene quer verlaufenden Ebene getrennt sind,
- Änderung der Polarisation von wenigstens zwei der drei gebündelten geteilten Strahlen (13, 14, 15), um drei polarisierte Strahlen in drei verschiedenen Polarisierungszuständen zu bilden,
- polarisationsmäßiges Trennen der drei polarisierten Strahlen, um sechs getrennte Strahlen (131, 132, 133, 134, 135, 136) zu bilden, die sich entlang sechs winkelmäßig getrennter optischer Achsen in einer Ebene quer zur Einfallsebene (8) ausbreiten,
- Erfassen der sechs getrennten Strahlen (131, 132, 133, 134, 135, 136), um daraus ein ellipsometrisches Maß abzuleiten.

14. Streumeßgerät (100) mit

- einer Lichtquelle (1), die dazu ausgelegt ist, einen Quellenlichtstrahl (10) zu erzeugen,
- einem Polarisator (5), der dazu ausgelegt ist, den Quellenlichtstrahl (10) zu empfangen und einen polarisierten einfallenden Lichtstrahl (11) zu erzeugen,
- einem optischen Beleuchtungssystem (2, 4), das dazu ausgelegt ist, den polarisierten einfallenden Lichtstrahl (11) entlang einer optischen Einfallsachse (9) in einer Einfallsebene (8) auf eine Probe (6) zu richten.
- einem optischen Strahlenteiler mit Frontwellenteilung (20), der zum Empfangen eines Sekundärlichtstrahls (12) angeordnet ist, der durch Beugung des polarisierten Einfallslichtstrahls (11) auf der Probe unter einem bestimmten Einfallswinkel gebildet worden ist, wobei sich der Sekundärlichtstrahl (12) entlang einer sekundären optischen Achse (19) in der Einfallsebene (8) ausbreitet, wobei der optische Strahlenteiler mit Frontwellenteilung (20) so orientiert ist, daß er drei gebündelte geteilte Strahlen (13, 14, 15) bildet, die sich entlang dreier verschiedener optischer Achsen (16, 17. 18), die in einer Ebene quer zur Einfallsebene (8) winkelmäßig getrennt sind, ausbreiten, und

- einer optischen Vorrichtung (25) zur Änderung der Polarisation, die zum Empfangen der drei gebündelten getrennten Strahlen (13, 14, 15) und zum Bilden von drei in drei verschiedenen Polarisationszuständen polarisierten Strahlen ausgelegt ist,

- einem optischen Polarisationstrenner (26), der zum Empfangen der drei in drei verschiedenen Polarisationszuständen polarisierten Strahlen und zum Bilden von sechs getrennten Strahlen (131, 132, 133, 134, 135, 136), die sich entlang sechs winkelmäßig getrennter optischer Achsen in einer zur Einfallsebene transversalen Ebene ausbreiten, angeordnet und ausgerichtet ist,

- einem Erfassungssystem, das zum Erfassen der sechs getrennten Strahlen (131. 132, 133, 134, 135, 136) ausgelegt ist, und einem Verarbeitungssystem, das dazu ausgelegt ist, daraus ein ellipsometrisches Maß abzuleiten

**15.** Streumeßgerät gemäß Anspruch 14 mit:

- einem optischen Fokussierungssystem (27), das zum Empfangen der sechs getrennten Strahlen (131, 132, 133, 134, 135, 136) und zum Bilden von sechs ausgerichteten und räumlich getrennten Bildern (141, 142, 143, 144, 145, 146) angeordnet ist.

- einem Bildspektrometer (30) mit einem sich in einer Richtung erstreckenden Eingangsschlitz (31), der so angeordnet ist, daß er die sechs Bilder (141, 142, 143, 144, 145, 146) gleichzeitig empfangen kann, wobei das Bildspektrometer (30) dazu ausgelegt ist, die sechs Bilder (141, 142, 143, 144, 145, 146) spektral zu streuen und gleichzeitig sechs räumlich getrennte spektrale Unterbilder (41, 42, 43. 44, 45, 46) auf einem Bildsensor (33) zu bilden,

- wobei der Bildsensor (33) dazu ausgelegt ist, ein Bild der sechs spektralen Unterbilder (41, 42, 43, 44, 45, 46) zu empfangen und

- das Verarbeitungssystem dazu ausgelegt ist, das Bild der sechs spektralen Unterbilder zu verarbeiten und daraus ein ellipsometrisches spektroskopisches Maß abzuleiten,

**Claims**

**1.** An ellipsometer (100) comprising:

- a light source (1) adapted to generate a source light beam (10);

- a polarizer (5) adapted to receive the source light beam (10) and to form a polarized incident light beam (11);

- an illumination optical system (2, 4) adapted to direct the polarized incident light beam (11) towards a sample (6) following an incident optical axis (9) in a plane of incidence (8);

- an optical wavefront-division beam splitter (20) arranged so as to receive a secondary light beam (12) formed by reflection or transmission of the polarized incident light beam (11) on the sample at a determined angle of incidence, the secondary light beam (12) propagating along a secondary optical axis (19) in the plane of incidence (8), the optical wavefront-division beam splitter (20) being directed so as to form three collimated split beams (13, 14, 15) propagating along three distinct optical axes (16, 17, 18) angularly separated in a plane transverse to the plane of incidence (8); and

- an optical polarization-changing device (25) adapted to receive the three collimated split beams (13, 14, 15) and to form three beams polarized according to three distinct states of polarization;

- an optical polarization-splitter device (26) arranged and directed so as to receive the three beams polarized according to three distinct states of polarization and to form six separated beams (131, 132, 133, 134, 135, 136) propagating along six optical axes angularly separated in the plane transverse to the plane of incidence;

- a detection system adapted to detect the six separated beams (131, 132, 133, 134, 135, 136) and a processing system adapted to deduce therefrom an ellipsometry measurement.

**2.** The ellipsometer according to claim 1, wherein the detection system comprises at least one spectrometer adapted to detect the six separated beams (131, 132, 133, 134, 135, 136).

**3.** The ellipsometer according to claim 2, comprising :

- an optical focusing system (27) arranged to receive the six separated beams (131, 132, 133, 134, 135, 136) and to form six images (141, 142, 143, 144, 145, 146) aligned with each other and spatially separated from each other;

- and wherein said at least one spectrometer comprises an imaging spectrometer (30) comprising an entrance slit (31) elongated along one direction and arranged so as to receive simultaneously the six images (141, 142, 143, 144, 145, 146), the imaging spectrometer (30) being adapted to spectrally disperse the six images (141, 142, 143, 144, 145, 146), and to form simultaneously six spectral sub-images (41, 42, 43, 44, 45, 46) spatially-separated on an image detector (33);

- the image detector (33) being adapted to acquire an image of the six spectral sub-images (41, 42, 43, 44, 45, 46); and

- the processing system being adapted to process the image of the six spectral sub-images and to deduce therefrom a spectroscopic ellipsometry measurement.

4. The ellipsometer according to any one of claims 1 to 3, wherein the optical illumination system (2, 4) is adapted to focus the polarized incident light beam (11) on the sample (6) and wherein the optical wavefront-division beam splitter includes a segmented lens (22) including three lens segments (221, 222, 223) having a same focal length and optical axes (225, 226, 227) parallel to each other and spatially separated from each other, each lens segment (221, 222, 223) having an object focal point (Fa, Fb, Fc), the thee lens segments (221, 222, 223) being assembled so that said three object focal points (Fa, Fb, Fc) are aligned on the sample (6) transversally to the plane of incidence, each lens segment (221, 222, 223) being arranged so as to receive a distinct portion of the secondary beam (12) and to form a collimated split beam (13, 14, 15), the three lens segments (221, 222, 223) being assembled so that said three split beams (13, 14, 15) propagate along the three distinct optical axes.

5. The ellipsometer (100) according to any one of claims 1 to 4, wherein the optical illumination system (2, 4) is adapted to collimate the polarized incident light beam (11) on the sample (6) and wherein the optical wavefront-division beam splitter includes at least two prisms (231, 232, 233) having their edges arranged parallel to the plane of incidence (8), each prism (231, 232, 233) being arranged so as to receive a distinct portion of the secondary beam (12) and to form a collimated split beam (13, 14, 15) propagating along an optical axis angularly deviated with respect to the secondary optical axis (19), the at least two prisms (231, 232) being directed and assembled so that said three collimated split beams (13, 14, 15) propagate along the three distinct optical axes.

6. The ellipsometer (100) according to any one of claims 1 to 5, wherein the optical polarization-changing device (25) includes at least two wave plates, each wave plate having a distinct retardance, a wave plate being arranged on one of the three split beams (13, 14, 15) and another wave plate being arranged on another one of the three split beams (13, 14, 15).

7. The ellipsometer (100) according to any one of claims 1 to 6, wherein the optical polarization-splitter device (26) includes a Wollaston prism, a Rochon prism, a Sénarmont prism or a diffractive wave plate.

8. The ellipsometer (100) according to any one of claims 1 to 7, wherein the light source (1) includes a halogen lamp, a xenon flash lamp, a supercontinuum laser source and/or a fibre optic laser and/or a pulse source.

9. The ellipsometer (100) according to claim 3 and claim 8, wherein the light source (1) includes a supercontinuum laser source and further includes a cylindrical lens arranged on the optical path of the secondary beam upstream from the entrance slit (31) of the imaging spectrometer (30), the cylindrical lens being adapted and directed so as to enlarge the six images transversally to the elongated direction of the entrance slit (31).

10. The ellipsometer (100) according to any one of claims 1 to 9, including a first source diaphragm (3), the optical illumination system (2, 4) being adapted to form a first image of the first source diaphragm (3) on the sample (6), and/or including a second source diaphragm, the optical illumination system (2, 4) being adapted to form a second image of the second source diaphragm on the sample (6), the surface area ratio between the first source diaphragm (3) and the second source diaphragm being higher than or equal to 10.

11. The ellipsometer (100) according to claim 3, wherein the light source (1) is adapted to generate a first series of N1 light pulses, where N1 is a natural integer, the image detector (33) being adapted to acquire a first image of the six spectral sub-images of the first series of N1 light pulses without saturation of the image detector (33), the light source (1) being adapted to generate a second series of N2 light pulses, where N2 is a natural integer, N2 being comprised between N1+1 and 25.N1, the image detector (33) being adapted to acquire a second image of the second series of N2 light pulses with saturation of the image detector (33) on a first portion of the six spectral sub-images and without saturation of the image detector (33) on a second portion of the six spectral sub-images, and wherein the processing system is adapted to combine the first portion of the six spectral sub-images of the first image with the second portion of the six spectral sub-images of the second image to deduce therefrom the spectroscopic ellipsometry measurement.

**12.** The ellipsometer (100) according to claim 3 or 11, wherein at least two spectral sub-images (41, 42, 43, 44, 45, 46) are spatially separated from each other by an intermediate area (51, 52, 53, 54, 55) and wherein the image processing system is adapted to measure a spurious light intensity in the intermediate area (51, 52, 53, 54, 55) and to subtract said spurious light intensity from at least a portion of the image of the six spectral sub-images.

**13.** An ellipsometry measurement method comprising the following steps:

- generating a polarized incident light beam (11);
- directing the polarized incident light beam (11) towards a sample (6) along an incident optical axis (9) in a plane of incidence (8);
- receiving a secondary beam (12) formed by reflection or transmission of the polarized incident light beam (11) on the sample (6) at a determined angle of incidence, the secondary beam (12) propagating along a secondary optical axis (19) in the incidence plane (8);
- optically splitting the secondary beam by wavefront division, so as to form three collimated split beams (13, 14, 15) propagating along three distinct optical axes, the three distinct optical axes being angularly separated in a plane transverse to the plane of incidence;
- changing the polarization of at least two of the three collimated split beams (13, 14, 15) so as to form three beams polarized according to three distinct states of polarization;
- polarization-splitting the three polarized beams so as to form six separated beams (131, 132, 133, 134, 135, 136) propagating along six optical axes angularly separated in a plane transverse to the plane of incidence (8);
- detecting the six separated beams (131, 132, 133, 134, 135, 136) to deduce therefrom an ellipsometry measurement.

**14.** A scatterometer (100) comprising:

- a light source (1) adapted to generate a source light beam (10);
- a polarizer (5) adapted to receive the source light beam (10) and to form a polarized incident light beam (11),
- an optical illumination system (2, 4) adapted to direct the polarized incident light beam (11) towards a sample (6) along an incident optical axis (9) in a plane of incidence (8);
- an optical wavefront-division beam splitter (20) arranged so as to receive a secondary light beam (12) formed by diffraction of the polarized incident light beam (11) on the sample at a determined angle of incidence, the secondary light beam (12) propagating along a secondary optical axis (19) in the plane of incidence (8), the optical wavefront-division beam splitter (20) being directed so as to form three collimated split beams (13, 14, 15) propagating along three distinct optical axes (16, 17, 18) angularly separated in a plane transverse to the plane of incidence (8); and
- an optical polarization-changing device (25) adapted to receive the three collimated split beams (13, 14, 15) and to form three beams polarized according to three distinct states of polarization;
- an optical polarization-splitter device (26) arranged and directed so as to receive the three beams polarized according to three distinct states of polarization and to form six separated beams (131, 132, 133, 134, 135, 136) propagating along six angularly separated optical axes in the plane transverse to the plane of incidence; and
- a detection system adapted to detect the six separated beams (131, 132, 133, 134, 135, 136) and a processing system to extract therefrom a scatterometry measurement.

**15.** The scatterometer (100) according to claim 14, comprising:

- an optical focusing system (27) arranged so as to receive the six separated beams (131, 132, 133, 134, 135, 136) and to form six aligned and spatially separated images (141, 142, 143, 144, 145, 146);
- an imaging spectrometer (30) comprising an entrance slit (31) elongated along one direction and arranged so as to receive simultaneously the six images (141, 142, 143, 144, 145, 146), the imaging spectrometer (30) being adapted to spectrally scatter the six images (141, 142, 143, 144, 145, 146) and to form simultaneously six spectral sub-images (41, 42, 43, 44, 45, 46) spatially separated on an image detector (33);
- the image detector (33) being adapted to acquire an image of the six spectral sub-images (41, 42, 43, 44, 45, 46); and
- the processing system being adapted to process the image of the six spectral sub-images and to deduce therefrom a spectroscopic scatterometry measurement.

Fig.1

Fig.2

B-B

Fig.3

Fig.4

## Fig.5

## Fig.6

**Fig.7**

C-C

**Fig.8**

**Fig.9**

Fig.10

Fig.11

Fig.12

**EP 3 765 835 B1**